# EUROPÄISCHE PATENTSCHRIFT

(11) **EP 1 126 269 B1**
(45) Veröffentlichungstag und Bekanntmachung des Hinweises auf die Patenterteilung: **26.03.2008**
(21) Anmeldenummer: 00102397.7
(22) Anmeldetag: 03.02.2000
(51) Int. Cl.: G01N 3/38, G01N 3/18

(54) **Vorrichtung zur dynamischen mechanischen Analyse von Proben**
Device for dynamic mechanical sample analysis
Dispositif pour l'analyse mécanique dynamique d'échantillons

(43) Veröffentlichungstag der Anmeldung: 22.08.2001
(73) Patentinhaber: Mettler-Toledo AG, 8606 Greifensee (CH)
(72) Erfinder: Buck, Reinhold, 8408 Winterthur (CH)
(74) Vertreter: Leinweber & Zimmermann

(56) Entgegenhaltungen:
- EP-A- 0 078 373
- EP-A- 0 793 088
- DE-A- 3 918 835
- DE-A- 4 309 530
- DE-U- 8 430 154
- US-A- 3 699 808
- US-A- 4 034 602
- US-A- 4 972 719

## Beschreibung

Die Erfindung bezieht sich auf eine Vorrichtung zur dynamischen mechanischen Analyse von Proben, bei der an einem steifen Träger mit aufrecht ausgerichteter Längsachse längs eines zu dieser parallelen linearen Kraftübertragungsweges angeordnet sind: ein an den Kraftübertragungsweg angeschlossener elektromechanischer Wandler zur Einleitung einer einem elektrischen Antriebssignal entsprechenden mechanischen Kraft, ein Probenhalter mit zwei längs des Kraftübertragungsweges relativ zueinander auslenkbaren Halteteilen, an deren einem die von dem Wandler eingeleitete Kraft angekoppelt sowie ein erster Bereich der Probe befestigbar ist und an deren anderem die der eingeleiteten Kraft entgegengerichtete Reaktionskraft abgestützt sowie ein von dem ersten Bereich beabstandeter zweiter Bereich der Probe befestigbar ist, eine Vorrichtung zur Messung der durch die eingeleitete Kraft hervorgerufenen Auslenkung der beiden Halteteile relativ zueinander, und eine Justiervorrichtung mit einem an ein Ende des Kraftübertragungsweges angeschlossenen Anschlußteil, das längs einer ersten Raumachse und längs einer dazu orthogonalen zweiten Raumachse quer zur Längsachse verstellbar ist.

Mit derartigen Vorrichtungen werden Materialeigenschaften von Proben, beispielsweise deren Elastizitätsmodul, durch periodische Krafteinwirkung auf die Probe untersucht. Dabei ist es wünschenswert, die Untersuchung mit hoher Genauigkeit über einen weiten Frequenzbereich durchzuführen. In dieser Hinsicht entsteht allerdings insbesondere im Bereich hoher Frequenzen das Problem unerwünschter Vibrationen. Außerdem ist zur Erzielung einer guten Meßgenauigkeit eine genaue Justierung in bezug auf den linearen Kraftübertragungsweg erforderlich.

Bei einer Vorrichtung der eingangs genannten Art (EP-A-0 793 088) ist der elektromagnetische Wandler durch einen Schlitten an den zum Probenhalter führenden Kraftübertragungsweg angeschlossen. Dieser Schlitten ist in seinem zur Längsachse der Vorrichtung orthogonalen Querschnitt quadratisch ausgebildet und weist vier zur Längsachse parallele Seitenflächen auf, die von Luftlagern umgeben sind, welche den Schlitten in der Richtung der Längsachse führen. Die Luftlager sind durch Einstellschrauben quer zur Längsachse verstellbar, wodurch die Führungsbahn des das Anschlußteil bildenden Schlittens im Kraftübertragungsweg quer zur Längsachse der Vorrichtung justierbar ist. Hierdurch wird allerdings nur eine ausreichende Justierung in bezug auf den elektromechanischen Wandler erreicht, nicht jedoch in bezug auf den Probenhalter.

Bei einer anderen bekannten Vorrichtung zur Ermittlung dynamischer und statischer Kenngrößen elastischer Werkstoffe (DE 39 18 835 A1) wird die Probe zwischen einer von einem Schwingungserreger angetriebenen Erregerplatte und einer ihr gegenüberliegenden, stationären Gegenplatte angeordnet, wobei die Ankopplung an die Erreger- und Gegenplatte über eine Verklebung und/oder eine statische Vorspannung erfolgt. In dieser Druckschrift ist angegeben, daß der an der Unterseite der Erregerplatte angebrachte Schwingungserreger in seiner Befestigungsvorrichtung justiert werden kann. Weitere Angaben hinsichtlich der Justierung, insbesondere ihrer Ausgestaltung, sind in dieser Druckschrift jedoch nicht enthalten.

Weiterhin ist eine Vorrichtung zur dynamischen mechanischen Analyse von Proben bekannt (US-A-4,034,602), bei der die Probe zwischen den freien Enden zweier zueinander paralleler Schwingarme eingespannt wird, in deren einen die mechanische Antriebskraft eines elektromagnetischen Wandlers an seinem der Probe entgegengesetzten Ende eingeleitet wird. Die zur schwingungsfähigen Lagerung der Schwingarme dienenden Schwenklager sind auf verstellbaren Lagerböcken angeordnet, so daß die Schwingarme sowohl bezüglich ihrer Längsrichtung als auch seitlich justiert werden können.

Schließlich weist eine zur Messung der Scherfestigkeit dienende bekannte Vorrichtung (US-A-3,699,808) ein Joch mit zwei um eine horizontale Mittelachse zentrierten, axialen Armen und einem zwischen die beiden axialen Arme ragenden, axialen Zugstab auf, dessen den axialen Armen abgewandtes Ende an einer sehr großen Masse festgelegt ist. Zwischen den einander zugewandten Seitenflächen des Zugstabs und der axialen Arme ist je eine Probe eingeklebt, die durch eine axiale Schwingungsbeaufschlagung des die Arme aufweisenden Jochs einer dynamischen Scherbelastung unterzogen wird. Für Kompressionsuntersuchungen ist alternativ eine gegenüber der sehr großen Masse abgestützte stationäre Kompressionsplatte und in Gegenüberstellung dazu eine mit der axialen Schwingung beaufschlagbare Kompressionsplatte vorgesehen, wobei die Probe zwischen diesen beiden Kompressionsplatten angeordnet ist. Eine Justierung ist mit dieser bekannten Vorrichtung nur insoweit vorgesehen, als die sehr große Masse durch einen manuell betätigbaren Kurbeltrieb axial verstellt werden kann.

Der Erfindung liegt die Aufgabe zugrunde, eine Vorrichtung der eingangs genannten Art im Hinblick auf die Meßgenauigkeit und den nutzbaren Frequenzbereich zu verbessern.

Erfindungsgemäß besteht ein Beitrag zur Lösung dieser Aufgabe darin, daß die Justiervorrichtung einen längs der ersten Raumachse verschiebbar geführten ersten Schlitten aufweist, sowie einen an dem ersten Schlitten auf einem ersten zylindrischen Führungsflächensegment mit zur ersten Raumachse paralleler erster Zylinderachse verschiebbar geführten Schwenkrahmen und einen an dem Schwenkrahmen längs der zweiten Raumachse verschiebbar geführten zweiten Schlitten, an dem das Anschlußteil auf einem zweiten zylindrischen Führungsflächensegment mit zur zweiten Raumachse paralleler zweiter Zylinderachse verschiebbar geführt ist.

Durch die erfindungsgemäße Ausbildung der Justiervorrichtung läßt sich nicht nur der Angriffspunkt der eingeleiteten Kraft am Probenhalter in einer sich senkrecht zur Längsachse erstreckenden Ebene einstellen, sondern auch die Richtung der eingeleiteten Kraft. Dabei erfährt das Anschlußteil durch die beiden zylindrischen Führungsflächensegmente eine derartige Führung, daß es in seiner Längsrichtung auf die beiden Zylinderachsen fokussiert ist. Die dadurch erreichte Einstellbarkeit des Raumwinkels und die längs der beiden Raumachsen erfolgenden Querverstellungen sind im Rahmen der erforderlichen Verstellbereiche und Genauigkeit voneinander unabhängig einstellbar. Ein weiterer Vorteil der erfindungsgemäß ausgebildeten Justiervorrichtung besteht in ihrem kompakten Aufbau und geringem Platzbedarf.

Zweckmäßigerweise ist vorgesehen, daß die erste und die zweite Zylinderachse einander schneiden. Eine solche Wahl der Krümmungsradien und räumlichen Anordnung der beiden Führungsflächensegmente begünstigt den Grad der Unabhängigkeit von Querverstellung und Raumwinkelverstellung. Dies trägt wesentlich zur Erhöhung des Bedienungskomforts bei.

Zur Einstellung in der Richtung der ersten Raumachse ist in einer zweckmäßigen Ausführungsform vorgesehen, daß der erste Schlitten in einem feststehenden rahmenförmigen Gehäuseunterteil geführt ist, in dem eine sich axial in der ersten Raumrichtung erstreckende und in ein Gewinde des ersten Schlittens eingreifende erste Gewindespindel drehbar gelagert ist. Hierbei ist das Maß der Verstellung in der ersten Raumrichtung durch die Ganghöhe der ersten Gewindespindel und das jeweilige Ausmaß ihrer Drehung bestimmt.

Eine andere zweckmäßige Ausgestaltung zeichnet sich dadurch aus, daß das erste zylindrische Führungsflächensegment durch zwei an zwei sich quer zur ersten Raumachse erstreckenden Stirnenden des ersten Schlittens ausgebildete Kreisscheibensegmente gebildet ist, zwischen denen der Schwenkrahmen angeordnet und auf dazu komplementär ausgebildeten Ausnehmungen seiner entsprechenden Stirnenden abgestützt ist. Hierdurch wird insbesondere die Bauhöhe in der Längsachse klein gehalten.

Im Hinblick auf die Verstellbarkeit in der zweiten Raumrichtung kann die Vorrichtung zweckmäßigerweise derart ausgebildet sein, daß der zweite Schlitten in dem Schwenkrahmen geführt ist, in dem eine sich axial in der zweiten Raumrichtung erstreckende und in ein Gewinde des zweiten Schlittens eingreifende zweite Gewindespindel drehbar gelagert ist. Hierbei bestimmt die Ganghöhe der zweiten Gewindespindel und die ihr jeweils erteilte Umdrehung die Einstellung in der zweiten Raumrichtung.

Weiter ist es insbesondere zugunsten einer geringen Bauhöhe zweckmäßig, die Vorrichtung derart auszubilden, daß das zweite zylindrische Führungsflächensegment durch zwei an zwei sich quer zur zweiten Raumachse erstreckenden Stirnenden des zweiten Schlittens ausgebildete Zylindermantelsegmente gebildet ist, auf denen das Anschlußteil mit dazu komplementär ausgebildeten Gleitflächen abgestützt ist.

Für den Gesamtaufbau der Vorrichtung ist es auch vorteilhaft, daß das Anschlußteil einen sich in der Längsachse erstreckenden, durch Ausnehmungen der Schlitten und des Schwenkrahmens hindurchgreifenden Ansatz aufweist. Auf diese Weise ist das Anschlußteil mit seinem Ansatz an einer Stirnseite der Justiervorrichtung frei zugänglich; wodurch der Anschluß von längs des Kraftübertragungsweges wirkenden Kraftübertragungsgliedern erleichtert ist.

Zur Einstellung des Raumwinkels in einer zur ersten Raumachse senkrechten Ebene ist die Vorrichtung zweckmäßigerweise derart ausgestaltet, daß in einem feststehenden Gehäuseoberteil eine sich axial in der zweiten Raumrichtung erstrekkende dritte Gewindespindel drehbar gelagert ist, auf deren Gewinde ein an dem Schwenkrahmen angreifender Mitnehmer geführt ist. Die Ganghöhe und Umdrehung der dritten Gewindespindel bestimmt die Verschiebung des Mitnehmers längs der zweiten Raumrichtung und dadurch die Lage des von dem Mitnehmer mitgeführten Schwenkrahmens auf dem ersten zylindrischen Führungsflächensegment. Dadurch wird die Winkeleinstellung in zur ersten Raumachse orthogonalen Ebenen bestimmt.

Zur Einstellung des Raumwinkels in zur zweiten Raumachse orthogonalen Ebenen ist die Vorrichtung zweckmäßigerweise derart ausgestaltet, daß in einem feststehenden Gehäuseoberteil eine sich axial in der ersten Raumrichtung erstreckende vierte Gewindespindel drehbar und axialverschieblich gelagert ist, die durch einen ersten Mitnehmer mit dem zweiten Schlitten gekoppelt und auf deren Gewinde ein an dem Anschlußteil angreifender zweiter Mitnehmer geführt ist. Wegen dieser Kopplung mit dem zweiten Schlitten folgt die vierte Gewindespindel der Einstellbewegung längs der ersten Raumachse, wogegen durch ihre Drehung der zweite Mitnehmer entsprechend ihrer Ganghöhe längs der ersten Raumachse verschoben und dadurch der mit dem zweiten Mitnehmer gekoppelte Anschlußteil auf dem zweiten zylindrischen Führungsflächenelement entsprechend verschoben wird, wodurch der Raumwinkel in zur zweiten Raumachse parallelen Ebenen eingestellt wird.

Im Rahmen der Erfindung ist ferner vorgesehen, daß an den auf den Gewinden der Gewindespindeln geführten Teilen sich parallel zu den Gewindespindeln erstreckende Anzeigestifte festgelegt sind. Da die Quereinstellung des Anschlußteils längs der ersten und der zweiten Raumachse durch die Stellung des ersten bzw. zweiten Schlittens auf den Gewinden der ersten bzw. zweiten Gewindespindel und die Raumwinkeleinstellung durch die Stellung der Mitnehmer auf den Gewinden der dritten und vierten Gewindespindel bestimmt ist, zeigen die an diesen Teilen festgelegten Anzeigestifte relativ zu den entsprechenden Gewindespindeln dem Benutzer die Einstellungen der Querlage und des Raumwinkels an.

Ein anderer Beitrag zur Aufgabenlösung wird insbesondere bei einer Vorrichtung der eingangs genannten Art dadurch erreicht, daß der Probenhalter ein Gehäuse mit einem sich längs einer quer zur Längsachse gerichteten Querachse durch das Gehäuse hindurch erstreckenden Aufnahmeraum für einen dreiteiligen Einsatz, dessen in der Richtung der Querachse gesehen mittlerer Teil den ersten Halteteil bildet und formschlüssig in einem in dem Aufnahmeraum mit Bewegungsspielraum angeordneten Ring gelagert und dessen beidseits des mittleren Teils angeordnete Seitenteile den zweiten Halteteil bilden und formschlüssig in dem Aufnahmeraum gelagert sind, aufweist, sowie mit einer Öffnung zur Durchführung eines sich in der Längsachse erstreckenden und an den Ring angeschlossenen Kraftübertragungsgliedes und mit einem der Öffnung in der Längsachse gesehen gegenüberliegenden Anschlußbereich für ein der Aufnahme der Reaktionskraft dienendes Glied.

Diese Gestaltung des Probenhalters ist einerseits hinsichtlich des Schwingungsverhaltens und der Stabilitätsanforderungen vorteilhaft. Andererseits bietet er die Fähigkeit zur Aufnahme unterschiedlich gestalteter Proben und ist in seiner Handhabung einfach. Insbesondere werden diese Vorteile erreicht, wenn der mittlere Teil und die beiden Seitenteile als zylindrische Scheiben mit sich in bezug auf die Querachse radial erstreckenden kreisförmigen Stirnflächen ausgebildet sind. Diese Ausgestaltung eignet sich insbesondere für die Untersuchung von Proben unter Scherbelastung. Dabei werden die Proben zwischen den kreisförmigen Stirnflächen des mittleren Teils und der beiden Seitenteile eingespannt.

Eine für bandförmige Proben besonders geeignete Ausgestaltung besteht darin, daß der Einsatz einen in seinem mittleren Teil ausgebildeten Probenaufnahmeraum, einen sich von dem Probenaufnahmeraum aus in bezug auf die Querachse radial nach außen erstreckenden Klemmspalt und einen den Probenaufnahmeraum an einer von dem Klemmspalt radial beabstandeten Stelle in der Richtung der Querachse durchsetzenden starren Stab, der mit seinen Enden in Ausnehmungen der beiden Seitenteile abgestützt ist, aufweist. In diesem Fall kann die bandförmige Probe um den starren Stab herumgeschlungen und mit ihren freien Enden in dem Klemmspalt eingespannt werden. Die Untersuchung der Probe erfolgt dann auf Zug.

Eine für die Druckanregung von Proben zweckmäßige Ausführungsform besteht darin, daß der Einsatz einen in seinem mittleren Teil ausgebildeten Probenaufnahmeraum, eine in dem Probenaufnahmeraum ausgebildete Abstützfläche zur in bezug auf die Querachse radialen Abstützung einer Probe und eine den Probenaufnahmeraum an einer von der Abstützfläche radial beabstandeten Stelle in der Richtung der Querachse durchsetzende Gegenabstützung aufweist, die mit ihren Enden in Ausnehmungen der beiden Seitenteile abgestützt ist. In diesem Fall wird eine block- oder stabförmig geformte Probe zwischen der Abstützfläche und der Gegenabstützung eingespannt und die Druckkraft in die Probe eingeleitet.

Eine der Handhabung des Probenhalters besonders förderliche Maßnahme besteht darin, daß in dem mittleren Teil und den beiden Seitenteilen in der Richtung der Querachse miteinander fluchtende Zentrierbohrungen zur Aufnahme von Zentrierstiften ausgebildet sind. Mit Hilfe der Zentrierstifte können die beiden Seitenteile und der mittlere Teil relativ zueinander zentriert und fixiert werden, was die Zusammensetzung des Probenhalters beim Einsetzen der verschiedenen Arten von Proben erleichtert.

Gemäß einem anderen Gedanken der Erfindung wird ein Beitrag zur Aufgabenlösung insbesondere bei einer Vorrichtung der eingangs genannten Art dadurch erreicht, daß der Träger in der Form eines den Kraftübertragungsweg mit dem Wandler, dem Probenhalter, der Meßvorrichtung und der Justiervorrichtung umschließenden Rohrkörpers mit einer im Bereich des Probenhalters vorgesehenen Zugangsöffnung ausgebildet ist.

Der als Träger dienende Rohrkörper ermöglicht eine besonders biegesteife Ausbildung. Dies führt zu einem günstigen Schwingungsverhalten unter der in den Kraftübertragungsweg eingeleiteten Anregungskraft, deren Reaktionskraft von dem Träger aufgenommen werden muß.

Eine bevorzugte Ausführungsform besteht darin, daß im Bereich des Probenhalters zwei Temperierkammerhälften vorgesehen sind, die längs einer sich quer zur Längsachse erstrekkenden Querachse zwischen einer geschlossenen Stellung, in der sie den Probenhalter umschließen, und einer geöffneten Stellung, in der der Probenhalter freiliegt, verschiebbar sind. In der geöffneten Stellung sind beide Temperierkammerhälften zusätzlich nach hinten-oben wegschwenkbar, um eine noch bessere Zugänglichkeit zum Probenraum zu ermöglichen. Häufig ist es erwünscht, die dynamische mechanische Analyse unter verschiedenen Temperaturen durchzuführen. Die beiden Temperierkammerhälften erzeugen in ihrer geschlossenen Stellung die gewünschte Temperaturumgebung für die Probe. Andererseits ist in ihrer geöffneten Stellung der Probenhalter mit der Probe, insbesondere zum Auswechseln, leicht zugänglich. Je nach der gewünschten Temperatur können die beiden Temperierkammerhälften sowohl beheizt als auch gekühlt sein.

In diesem Zusammenhang zeichnet sich ein besonders zweckmäßiger Aufbau dadurch aus, daß die Temperierkammerhälften an zwei an dem Rohrkörper abgestützten Seitenarmen angeordnet sind.

Weitere Merkmale, Einzelheiten und Vorteile ergeben sich aus der folgenden Beschreibung, in der die Erfindung anhand von Ausführungsbeispielen unter Bezugnahme auf die Zeichnung näher erläutert ist. Hierin zeigen:
- Fig. 1: eine Ansicht des inneren Aufbaus einer Vorrichtung zur dynamischen mechanischen Analyse von Proben, wobei zur Freigabe der Sicht ein das Innere umschließender rohrförmiger Träger weggelassen ist,
- Fig. 2a und 2b: perspektivische Ansichten des rohrförmigen Trägers von vorne und von hinten,
- Fig. 3: eine Explosionsdarstellung einer in Fig. 1 oben dargestellten Justiervorrichtung,
- Fig. 4: die Justiervorrichtung von Fig. 3 im zusammengebauten Zustand bei abgenommenen Gehäuseoberteil,
- Fig. 5: eine vergrößerte Ansicht eines im oberen Bereich von Fig. 1 erkennbaren Probenhalters,
- Fig. 6: eine Einzeldarstellung des Gehäuses des Probenhalters von Fig. 5,
- Fig. 7: eine Einzeldarstellung eines in dem Gehäuse angeordneten Rings des Probenhalters von Fig. 5,
- Fig. 8: eine Explosionsdarstellung einer ersten Ausführungsform eines Einsatzes für den Probenhalter von Fig. 5 bis 7,
- Fig. 9: eine Explosionsdarstellung einer zweiten Ausführungsform eines Einsatzes für den Probenhalter von Fig. 5 bis 7,
- Fig. 10: eine Explosionsdarstellung einer dritten Ausführungsform eines Einsatzes für den Probenhalter von Fig. 5 bis 7.

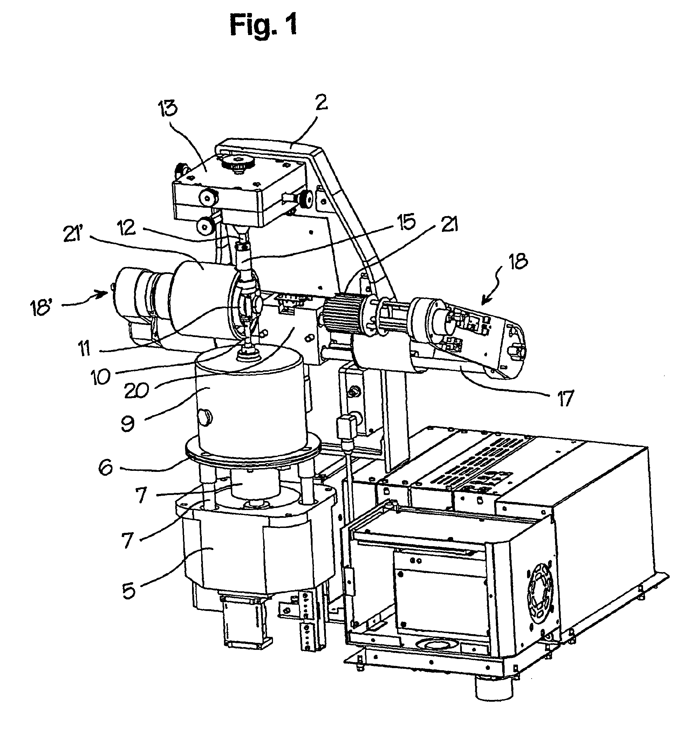

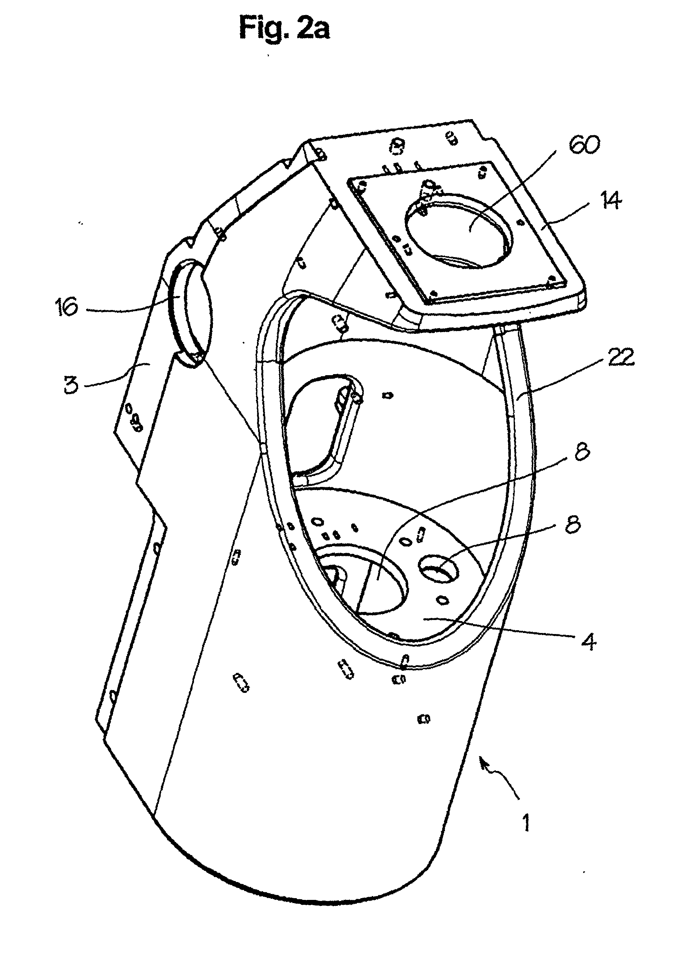

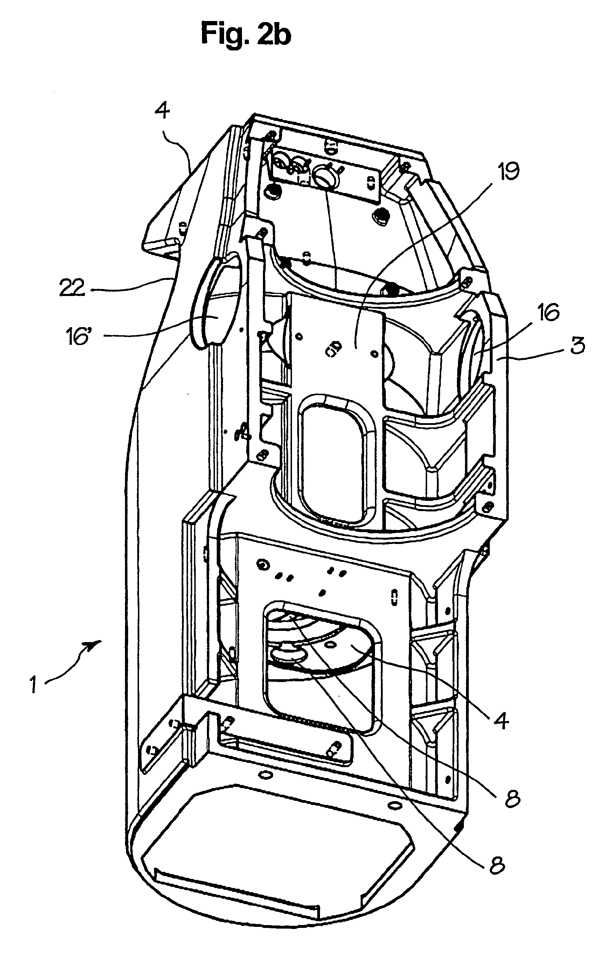

Ein in Fig. 2a und 2b dargestellter steifer Rohrkörper 1 dient als Träger für die wesentlichen Komponenten einer Vorrichtung zur dynamischen mechanischen Analyse von Proben. Diese Vorrichtung ist in Fig. 1 ohne den tragenden Rohrkörper 1 dargestellt, wodurch die Sicht auf die im zusammengebauten Zustand von dem Rohrkörper 1 umschlossenen Komponenten freigegeben ist. In Fig. 1 ist lediglich noch eine die Sicht nicht störende rückwärtige Abdeckung 2 eingezeichnet, mit der ein rückwärtiger Ansatz 3 des Rohrkörpers 1 im zusammengebauten Zustand verschlossen ist.

Im zusammengebauten Zustand der Vorrichtung ist der Rohrkörper 1 mit seiner Längsachse aufrecht ausgerichtet.

Der Rohrkörper 1 weist innen etwa in der Mitte seiner Längserstreckung eine zur Längsachse orthogonale Querwand 4 auf, an deren nach unten weisenden Seite ein Betätigungsorgan 5 für einen in der Richtung der Längsachse verschiebbaren Hebetisch 6 festgelegt ist. Der Hebetisch 6 ist mit dem Betätigungsorgan 5 durch sich parallel zur Längsachse erstreckende Führungs- bzw. Schubglieder betätigungsmäßig gekoppelt, die sich durch entsprechende Ausnehmungen 8 der Querwand 4 hindurch erstrecken.

Auf dem Hebetisch 6 ist ein elektromechanischer Wandler 9 abgestützt. Der Wandler 9 kann beispielsweise in der Form einer in einem Magnetfeld nach Art eines Lautsprechers angeordneten Schwingspule ausgebildet sein. Bei Einleitung eines elektrischen Antriebssignals erzeugt die Schwingspule eine entsprechende mechanische Kraft in der Richtung der Längsachse.

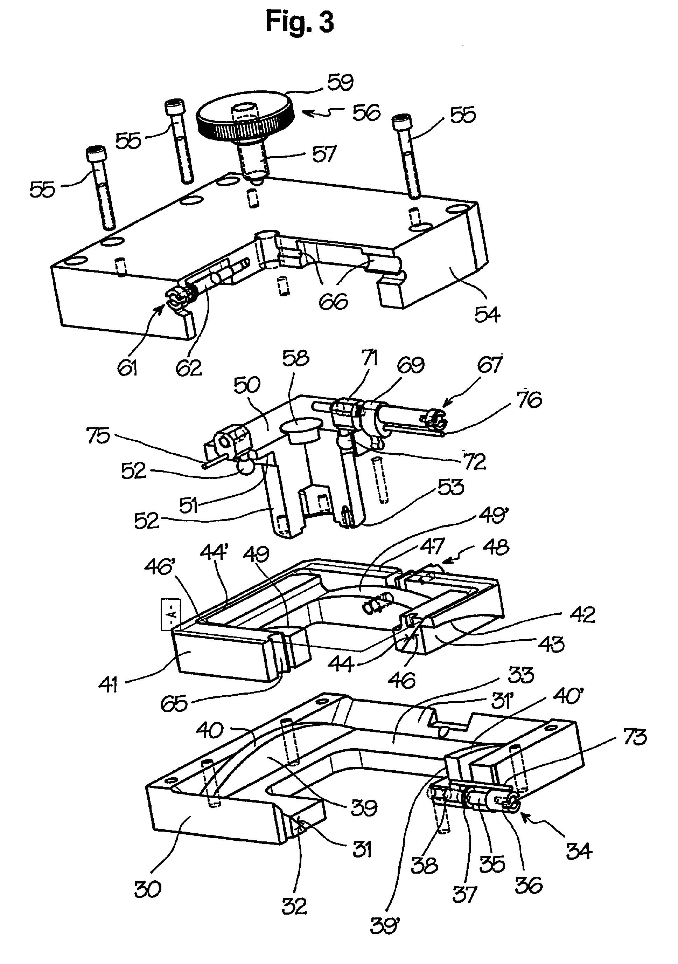

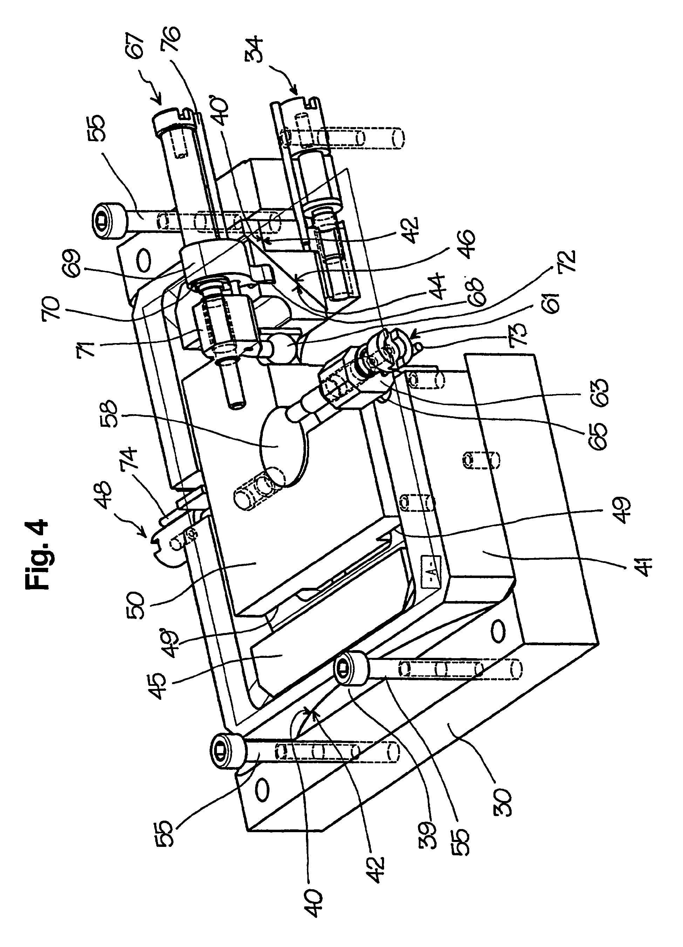

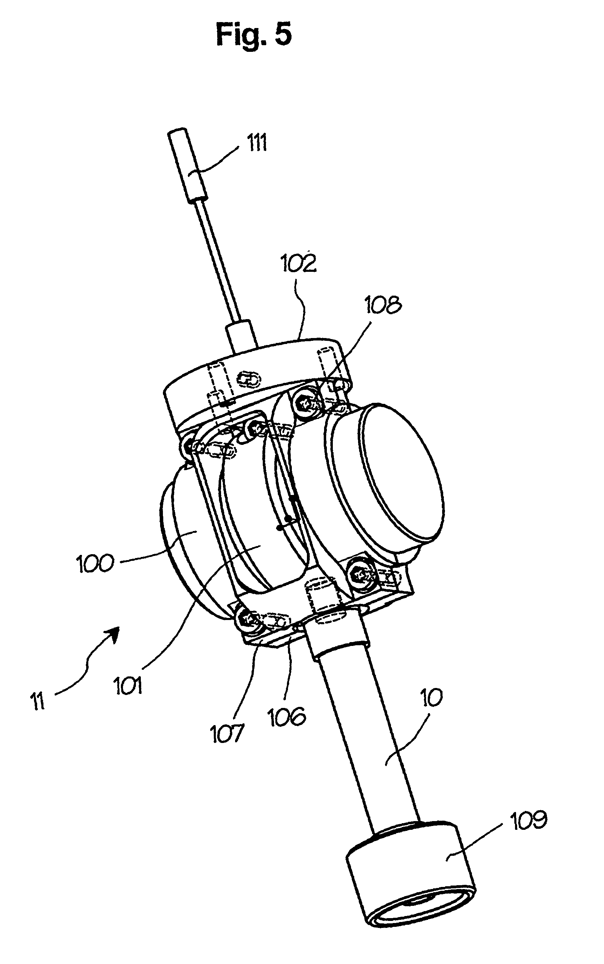

Diese mechanische Kraft wird durch ein sich in der Längsachse erstreckendes stabförmiges Koppelglied 10 auf einen Probenhalter 11 übertragen, von dem verschiedene Ausführungsformen in den Fig. 5 bis 10 dargestellt sind. Die der in den Probenhalter 11 über das Koppelglied 10 von dem elektromechanischen Wandler 9 her eingeleiteten Kraft entsprechende Reaktionskraft wird im weiteren Verlauf des sich in der Längsrichtung erstreckenden Kraftübertragungsweges von einem in dem Kraftübertragungsweg angeordneten Kraftsensor 12 gemessen. Der Kraftsensor 12, bei dem es sich beispielsweise um einen Quarzkraftsensor handelt, ist an eine Justiervorrichtung 13 angekoppelt, die im einzelnen in den Fig. 3 und 4 dargestellt ist. Diese Justiervorrichtung 13 ist an einer sich orthogonal zur Längsachse erstreckenden oberen Stirnwand 14 des Rohrkörpers 1 abgestützt.

Zwischen dem Probenhalter 11 und dem Kraftsensor 12 ist in dem Kraftübertragungsweg ein Wegaufnehmer 15 angeordnet, der die durch die eingeleitete Kraft hervorgerufenen Auslenkungen einer in dem Probenhalter 11 angeordneten Probe erfaßt. Es kann sich dabei beispielsweise um einen bekannten induktiven Wegaufnehmer handeln, bei dem die Bewegung eines Kerns in einer Spule erfaßt wird.

Der rückwärtige Ansatz 3 des Rohrkörpers 1 weist zwei in einer zur Längsachse orthogonalen Querachse miteinander fluchtende Öffnungen 16, 16' auf. Durch diese Öffnungen greifen sich parallel zu dieser Querachse erstreckende Tragstangen 17 von beidseits des Rohrkörpers 1 angeordneten Seitenarmen 18, 18'. Die Tragstangen 17 sind in einer an einer Befestigungswand 19 innerhalb des rückwärtigen Ansatzes 3 festgelegten Halterung 20 in der Richtung der Querachse verschieblich gelagert. Die Halterung 20 kann mit einem die Querverschiebung der Tragstangen 17 bewirkenden Motor versehen sein.

Von den dem Rohrkörper 1 abgewandten Enden der Tragstangen 17 aus erstrecken sich die Seitenarme 18, 18' quer zu den Tragstangen 17 bis in den Bereich einer zu den Tragstangen 17 parallelen und durch den Probenhalter 11 verlaufenden gedachten Achse. In diesem Bereich weist jeder der beiden Seitenarme 18, 18' je eine Temperierkammerhälfte 21, 21' auf. In dem dargestellten Ausführungsbeispiel sind die Temperierkammerhälften 21, 21' zylindrisch um die durch den Probenhalter 11 verlaufende gedachte Querachse herum ausgebildet und an ihren einander zugewandten radialen Stirnseiten offen. Angrenzend an diese Stirnseiten sind die Zylindermäntel mit zu dem Koppelglied 10 und dem Wegaufnehmer 15 komplementären Ausnehmungen versehen. Dadurch können sie mit ihren Stirnseiten aneinandergelegt werden, so daß sie den Probenhalter 11 umschließen und gleichzeitig den Durchtritt des daran angeschlossenen Koppelgliedes 10 und Wegaufnehmers 15 erlauben. Die verschiebbare Abstützung der Tragstangen 17 in der Halterung 20 ermöglicht die Verschiebung der Temperierkammerhälften 21, 21' zwischen ihrer geschlossenen Stellung, in der sie den Probenhalter 11 umschließen, und ihrer geöffneten Stellung, in der der Probenhalter 11 freiliegt. Zudem können die beiden Temperierkammerhälften durch Drehen der Seitenarme nach hinten-oben weggeschwenkt werden.

Um den Zugang der beiden Temperierkammerhälften 21, 21' zum Probenhalter 11 zu ermöglichen, ist in dem Rohrkörper 1 an seiner dem rückwärtigen Ansatz 3 entgegengesetzten Vorderseite eine Zugangsöffnung 22 von ausreichender Größe ausgebildet. Diese Zugangsöffnung 22 öffnet sich maulförmig zu der zur Bedienungsperson weisenden Vorderseite hin und erleichtert gleichzeitig die Handhabung des Probenhalters 11, insbesondere beim Einsetzen in die Vorrichtung und beim Herausnehmen.

Aus der Explosionsdarstellung von Fig. 3 und der Teildarstellung des zusammengesetzten Zustandes in Fig. 4 ist ersichtlich, daß die Justiervorrichtung 13 ein flaches rahmenförmiges Gehäuseunterteil 30 aufweist, dessen Rahmenebene sich in dem in die Vorrichtung eingebauten Zustand gemäß Fig. 1 quer zur Längsachse erstreckt. In Fig. 3 ist die rechte vordere Ecke zum Zwecke der Darstellung herausgeschnitten. Daraus ist erkennbar, daß an der Innenseite zweier einander gegenüberliegender und sich parallel zu einer ersten Raumrichtung erstreckender Rahmenschenkel lineare Gleitführungen 31, 31' ausgebildet sind, deren Flächennormalen gegen die Längsachse, beispielsweise um 45°, geneigt sind. Auf diesen Gleitführungen 31, 31' sind dazu komplementär ausgebildete Gleitflächen 32 eines innerhalb des rahmenförmigen Gehäuseunterteils 30 angeordneten ersten Schlittens 33 gleitverschieblich geführt. In einem der sich quer zu den Gleitführungen 31, 31' erstreckenden Rahmenschenkel des Gehäuseunterteils 30 ist eine Gewindespindel 34 mit einem gewindelosen, zylindrischen Schaftabschnitt 35 drehbar, aber axial unverschieblich gelagert, indem sie sich einerseits mit einer von einem Kopf 36 gebildeten Schulter an der Außenseite des Rahmenschenkels und andererseits mit einer von einer Ringscheibe 37 gebildeten Schulter an der Innenseite des Rahmenschenkels axial abstützt. Ein sich von der dem Rahmenschenkel abgewandten Seite der Ringscheibe 37 aus erstreckender Schaftabschnitt 38 ist mit einem Gewinde versehen, das mit einem entsprechenden Gegengewinde einer Bohrung des ersten Schlittens 33 kämmt. Auf diese Weise wird der erste Schlitten 33 durch Drehen der Gewindespindel 34 in der ersten Raumrichtung eingestellt.

An den beiden sich quer zur ersten Raumachse erstreckenden Stirnenden des ersten Schlittens 33 sind Kreisscheibensegmente 39, 39' ausgebildet, die im eingebauten Zustand von Fig. 1 in der Richtung der Längsachse nach oben gewölbt sind und deren Radialebenen sich parallel zur Längsachse sowie quer zur Rahmenebene des Gehäuseunterteils 30 erstrecken. Die radialen Ränder der Kreisscheibensegmente 39, 39' bilden auf diese Weise zylindersegmentförmige Führungsflächen 40, 40', auf denen ein Schwenkrahmen 41 mit dazu komplementär gewölbten Führungsflächen 42 gleitend abgestützt ist. Diese Führungsflächen 42 sind von Schultern in entsprechenden Schenkeln des Schwenkrahmens 41 ausgebildeten Ausnehmungen gebildet, deren zu den Führungsflächen 42 orthogonalen Begrenzungsflächen 43 den Schwenkrahmen 41 zwischen den Kreisscheibensegmenten 39, 39' in der ersten Raumrichtung unverschieblich festlegen.

Die mit den Führungsflächen 42 versehenen Rahmenschenkel des Schwenkrahmens 41 erstrecken sich parallel zu einer zur ersten Raumrichtung orthogonalen zweiten Raumrichtung. An ihren Innenseiten sind den Gleitführungen 31, 31' des Gehäuseunterteils 30 ähnliche Gleitführungen 44, 44' ausgebildet, auf denen ein im Inneren des Schwenkrahmens 41 angeordneter zweiter Schlitten 45 mit dazu komplementären Gleitflächen 46, 46' in der zweiten Raumrichtung verschieblich geführt ist.

Ähnlich der Verstellung des ersten Schlittens 33 im Gehäuseunterteil 30 mit Hilfe der Gewindespindel 34 ist in einem zur zweiten Raumrichtung orthogonalen Rahmenschenkel 47 des Schwenkrahmens 41 eine sich axial in der zweiten Raumrichtung erstreckende zweite Gewindespindel 48 drehbar und axial unverschieblich gelagert, deren mit dem Gewinde versehener Schaftbereich mit einem dazu komplementären Gewinde im zweiten Schlitten 45 kämmt. Auf diese Weise wird durch Drehung der zweiten Gewindespindel 48 der zweite Schlitten 45 in der zweiten Raumrichtung verstellt.

An zwei sich orthogonal zur zweiten Raumrichtung erstreckenden Stirnenden des zweiten Schlittens 45 sind zylindersegmentförmige Führungsflächen 49, 49' in der Richtung der Längsachse nach oben weisend ausgebildet, auf denen ein Anschlußteil 50 mit dazu komplementär gewölbten Gleitflächen 51 abgestützt ist. Die beiden Schlitten 33 und 45 sind ebenso wie das Gehäuseunterteil 30 und der Schwenkrahmen 41 rahmenförmig mit einem freien Innenquerschnitt ausgebildet, durch den ein an dem Anschlußteil 50 ausgebildeter zylindrischer Ansatz 52 mit zur Längsachse paralleler Zylinderachse hindurchgreift, so daß im zusammengebauten Zustand die nach unten weisende radiale Stirnseite 53 des Ansatzes 52 an der Unterseite des Gehäuseunterteils 30 freiliegt.

Fig. 4 zeigt einen Zustand, in dem die Teile der Explosionsdarstellung von Fig. 2 so weit zusammengebaut sind, daß der erste Schlitten 33 mit seinen stirnseitigen Kreisscheibensegmenten 39, 39' auf die Gleitführungen 31, 31' des Gehäuseunterteils 30 aufgesetzt ist. Weiter ist der Schwenkrahmen 41 mit seinen zylindersegmentförmigen Führungsflächen 42 auf die zylindersegmentförmigen Führungsflächen 40, 40' des ersten Schlittens 33 aufgesetzt. In den Schwenkrahmen 41 ist der zweite Schlitten 45 eingesetzt. Der in Fig. 4 zum Zwecke der Darstellung weggebrochene rechte untere Teil läßt im Querschnitt die Anlage zwischen einer der Gleitführungen 44 des Schwenkrahmens 41 und einer der Gleitflächen 46 des zweiten Schlittens 45 erkennen. Schließlich ist das Anschlußteil 50 auf den zylindersegmentförmigen Führungsflächen 49, 49' des zweiten Schlittens 45 sichtbar. Ferner sind in Fig. 4 die beiden Gewindespindeln 34 und 48 erkennbar, deren eine in dem unteren Gehäuseteil 30 und deren andere in dem Schwenkrahmen 41 drehbar gelagert ist.

Auf die in Fig. 4 gezeigte Zusammenstellung wird ein in der Explosionsdarstellung von Fig. 3 oben dargestelltes Gehäuseoberteil 54 aufgesetzt und durch zur Längsrichtung parallele Schraubbolzen 55 auf dem Gehäuseunterteil 30 festgespannt. Ein in das Gehäuseoberteil 54 zentral eingeschraubtes Druckstück 56 drückt mit dem freien Stirnende eines sich in der Längsrichtung erstreckenden Gewindebolzens 57 auf ein Gegenlager 58 am Anschlußteil 50 und hält dadurch die Teile unter gegenseitiger axialer Verspannung. Der Spanndruck ist mittels eines am entgegengesetzten Ende des Gewindebolzens 57 angeordneten Drehknopfs 59 einstellbar.

Aus Fig. 3 ist weiter ersichtlich, daß in dem Gehäuseoberteil 54 eine dritte Gewindespindel 61 auf ähnliche Weise drehbar und axial unverschieblich gelagert ist wie die erste und zweite Gewindespindel 34 bzw. 48 im Gehäuseunterteil 30 bzw. im Schwenkrahmen 41. Auf dem das Gewinde aufweisenden Schaftabschnitt 62 dieser sich in der zweiten Raumrichtung erstreckenden dritten Gewindespindel 61 ist ein Mitnehmer 63 mit einem dazu komplementären Gewinde geführt. Der Mitnehmer 63 greift mit einem sphärischen Endbereich 64 eines nach unten weisenden Auslegers in eine zylindrische Bohrung 65 des Schwenkrahmens 41 ein. Dies ist insbesondere in Fig. 4 erkennbar, in der die dritte Gewindespindel 61 und der Mitnehmer 63 ebenfalls dargestellt sind. Bei einer Drehung der Gewindespindel 61 verschiebt sich der Mitnehmer in der zweiten Raumrichtung und zieht durch den Eingriff des sphärischen Endbereichs 64 seines Auslegers in die Bohrung 65 den Schwenkrahmen 41 auf den zylindersegmentförmigen Führungsflächen 40, 40' des ersten Schlittens 33 mit. Die dadurch bewirkte Einstellung des Raumwinkels in der zur ersten Raumrichtung orthogonalen Ebene bleibt selbst dann unverändert, wenn der Schwenkrahmen 41 einer Einstellung des ersten Schlittens 33 in der ersten Raumrichtung mittels der Gewindespindel 34 folgend bewegt wird, weil dann der Mitnehmer 63 dieser Bewegung durch eine entsprechende Schwenkbewegung um die Achse der dritten Gewindespindel 61 folgt und bei einer geeigneten Bemessung des Reibschlusses zwischen Mitnehmer 63 und dritter Gewindespindel 61 letztere der Verschwenkung des Mitnehmers 63 ebenfalls folgt, ohne daß es zu einer Relativdrehung zwischen Mitnehmer 63 und Gewindespindel 61 kommt.

Aus Fig. 3 und 4 ist weiter zu erkennen, daß in einer Bohrung 66 des Gehäuseoberteils 54, deren Achse sich in der ersten Raumrichtung erstreckt, eine vierte Gewindespindel 67 drehbar und axialverschieblich geführt ist. Auf der vierten Gewindespindel 67 ist ein in eine Ausnehmung 68 des zweiten Schlittens 45 eingreifender erster Mitnehmer 69 drehbar, aber axial unverschieblich gelagert. Zu diesem Zweck stützt sich der Mitnehmer 69 auf einer Seite an einer radialen Schulter eines aus dem Gehäuseoberteil 54 herausragenden Abschnittes der Gewindespindel 67 und auf seiner dazu entgegengesetzten Seite auf einer radialen Scheibe 70 der vierten Gewindespindel 67 ab. Auf dem sich von der radialen Scheibe 70 aus nach innen erstreckenden und mit dem Gewinde versehenen Abschnitt der vierten Gewindespindel 67 ist ein zweiter Mitnehmer 71 mit einem dazu komplementären Gewinde geführt. Ein sphärischer Endbereich 72 eines an dem zweiten Mitnehmer 71 vorgesehenen Auslegers steht mit einer Bohrung des Anschlußteils 50 in Eingriff. Auf diese Weise wird das Anschlußteil 50 bei einer Drehung der vierten Gewindespindel 67 der Verschiebung des zweiten Mitnehmers 71 auf der vierten Gewindespindel 67 folgend über die Führungsflächen 49, 49' des zweiten Schlittens 45 hinweggezogen, wodurch der Raumwinkel in einer zur zweiten Raumrichtung orthogonalen Ebene eingestellt wird. Gleichzeitig sorgt der mit dem zweiten Schlitten 45 gekoppelte erste Mitnehmer 69 dafür, daß die vierte Gewindespindel 67 in der Bohrung 66 der Bewegung des zweiten Schlittens 45 bei einer Verstellung in der ersten Raumrichtung durch die erste Gewindespindel 34 folgt. Gleichzeitig kann der erste Mitnehmer 69 bei einer Verstellung des zweiten Schlittens 45 durch die zweite Gewindespindel 48 deren Bewegung durch eine entsprechende Verschwenkung auf der vierten Gewindespindel 67 folgen, ohne daß es zu einer Relativdrehung zwischen der vierten Gewindespindel 67 und dem auf ihr angeordneten zweiten Mitnehmer 71 kommt. Folglich wird die Verstellung des Raumwinkels in der zur zweiten Raumrichtung orthogonalen Ebene durch eine Verstellung in der ersten und zweiten Raumrichtung mittels der Gewindespindeln 34 und 48 nicht beeinflußt.

An dem ersten Schlitten 33 und dem zweiten Schlitten 45 ist jeweils ein sich parallel zur ersten Gewindespindel 34 bzw. zur zweiten Gewindespindel 48 erstreckender Anzeigestift 73 bzw. 74 befestigt und erstreckt sich aus dem aus dem Gehäuseunterteil 30 und dem Gehäuseoberteil 54 zusammengesetzten Gehäuse heraus. Durch die Stellung der Anzeigestifte 73 und 74 in bezug auf die zugehörige Spindel kann somit die Bedienungsperson die Lage des Anschlußteils 50 in bezug auf die erste und die zweite Raumrichtung ablesen.

Ähnlich ist an dem Mitnehmer 63 ein sich parallel zur dritten Gewindespindel 61 erstreckender Anzeigestift 75 befestigt und parallel zur Gewindespindel aus dem Gehäuse herausgeführt. Dieser Anzeigestift 75 stellt die Einstellung des Raumwinkels in der zur ersten Raumrichtung orthogonalen Ebene dar. Gleichermaßen ist an dem zweiten Mitnehmer 71 ein sich parallel zur vierten Gewindespindel 67 erstreckender Anzeigestift 76 befestigt und durch eine Durchgangsöffnung des ersten Mitnehmers 69 hindurch aus dem Gehäuse herausgeführt. Durch den Anzeigestift 76 wird die Einstellung des Raumwinkels in der zur zweiten Raumrichtung orthogonalen Ebene angezeigt.

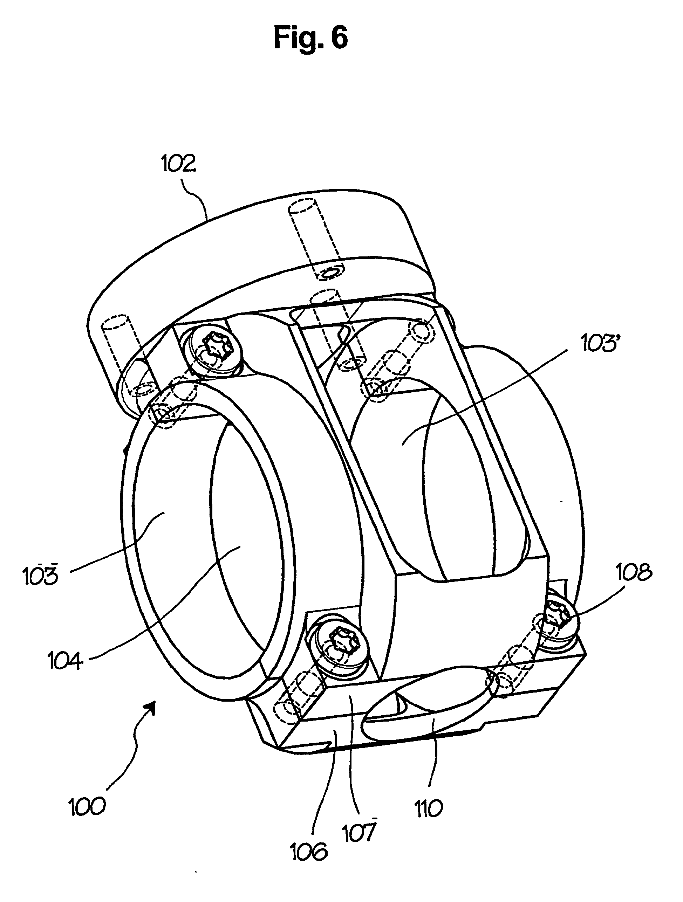

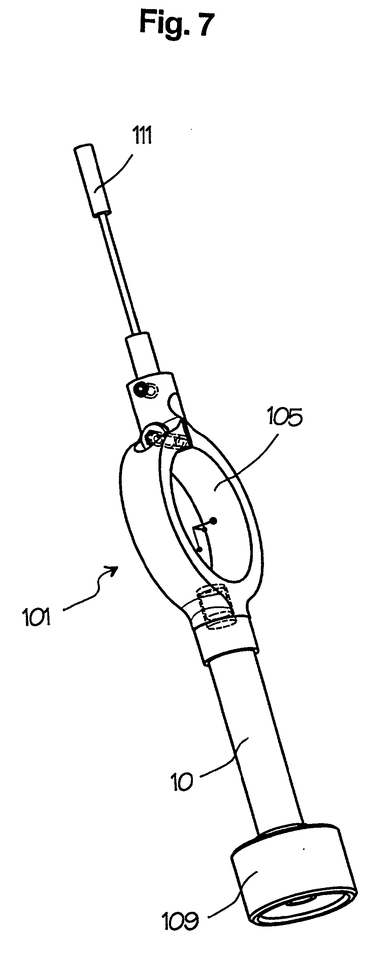

Fig. 5 zeigt eine Gesamtansicht einer Ausführungsform des Probenhalters 11, der ein in Fig. 6 dargestelltes Gehäuse 100 und einen in Fig. 7 dargestellten Ring 101 aufweist. An dem Gehäuse 100 ist ein zu einem in bezug auf die Längsachse radialen Anschlußflansch des Wegaufnehmers 15 komplementärer Anschlußflansch 102 ausgebildet, mit dem das Gehäuse 100 durch zur Längsachse parallele Schrauben fest mit dem Gehäuse des Wegaufnehmers 15 verbunden wird.

Eine quer zur Längsachse gerichtete Querachse bildet eine gemeinsame Zylinderachse für zwei zylindrische Eintrittsbereiche 103, 103' eines Aufnahmeraums, der einen axial zwischen den beiden Eintrittsbereichen begrenzten und gegenüber den Eintrittsbereichen vergrößerten mittleren Bereich 104 aufweist. In dem mittleren Bereich 104 ist der Ring 101, dessen zylindrischer Innenmantel 105 denselben Durchmesser aufweist wie die beiden zylindrischen Eintrittsbereiche 103, 103', mit allseitigem Spiel angeordnet. Das Gehäuse 100 ist längs einer durch die Längsachse und die Querachse aufgespannten Ebene zweigeteilt, wobei die beiden schalenförmigen Teile 106, 107 durch sich quer zur Längsachse erstreckende Schraubbolzen 108 zusammengehalten werden. Das dem Ring 101 innerhalb des Gehäuses 100 zur Verfügung stehende Spiel ist derart bemessen, daß in einer zentrierten Lage der Innenmantel 105 des Rings 101 mit den Innenmänteln der zylindrischen Eintrittsbereiche 103, 103' genau ausgerichtet ist. Aus dieser zentrierten Lage kann der Ring 101 mindestens um die bei der dynamischen mechanischen Analyse von Proben erwünschte maximale Auslenkung ausgelenkt werden, ohne an dem Gehäuse 100 anzustoßen.

Am Außenumfang des Rings 101 ist das sich zum elektromagnetischen Wandler 9 hin erstreckende, stabförmige Koppelglied 10 in radialer Richtung festgelegt. Das dem Ring 101 abgewandte Ende des Koppelglieds 10 ist mit einer Überwurfmutter 109 versehen, die im Zusammenspiel mit einem Steilkegel zum Anschluß des Koppelgliedes 10 an den Wandler 9 dient. In dem Gehäuse 100 ist in dem dem Anschlußflansch 102 diametral gegenüberliegenden Bereich eine Durchtrittsöffnung 110 ausgebildet, durch die das Koppelglied 10 mit seitlichem Spiel aus dem Gehäuse 100 herausgeführt ist. Der Durchtrittsöffnung 110 diametral gegenüberliegend ist in dem Anschlußflansch 102 ebenfalls eine Durchtrittsöffnung ausgebildet, durch die ein mit der Längsachse des Koppelgliedes 10 fluchtender Kern 111 des Wegaufnehmers 15 herausgeführt ist, wobei der Kern 111 an einer der Befestigungsstelle des Koppelgliedes 10 am Ring 101 diametral gegenüberliegenden Stelle des Rings 101 befestigt ist. Im zusammengebauten Zustand ist der Anschlußflansch 102 des Gehäuses 100 mit dem entsprechenden Anschlußflansch des rohrförmigen Außenmantels des Wegaufnehmers 15 zusammengespannt, wodurch der Kern 111 in bekannter Weise axial in der zylindrischen Spule des Wegaufnehmers 15 beweglich geführt ist.

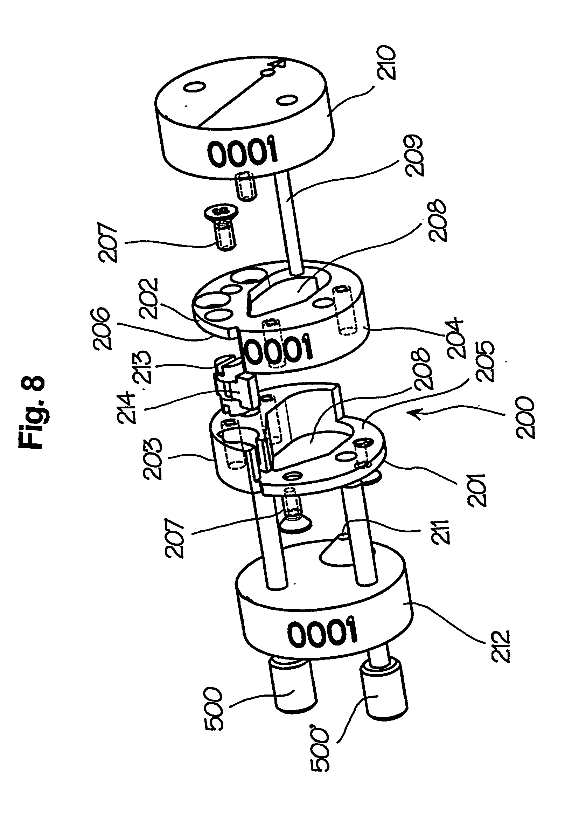

Durch diese Anordnung wird der Ring 101 mit der von dem elektromechanischen Wandler 9 eingeleiteten Kraft beaufschlagt, wogegen das über den Wegaufnehmer 15 und den Kraftsensor 12 mit dem Anschlußteil 50 der Justiervorrichtung 13 verbundene Gehäuse 100 die Reaktionskraft aufnehmen kann. Hierzu dient ein dreiteiliger Einsatz mit einem in der Richtung der Querachse gesehen mittleren Teil und zwei beidseits des mittleren Teils angeordneten Seitenteilen. Verschiedene Ausführungsformen dieses dreiteiligen Einsatzes sind in den Fig. 8 bis 10 dargestellt. Bei allen diesen Ausführungsformen sind der mittlere Teil und die beiden Seitenteile als zylindrische Scheiben mit sich in bezug auf die Querachse radial erstreckenden kreisförmigen Stirnflächen ausgebildet.

Fig. 8 zeigt eine Explosionsdarstellung einer ersten Ausführungsform des dreiteiligen Einsatzes, bei der die den mittleren Teil bildende zylindrische Scheibe 200 aus zwei Teilscheiben 201, 202 zusammengesetzt ist, die mit zueinander komplementären axialen Vorsprüngen 203, 204 und diesen Vorsprüngen entsprechenden Ausnehmungen 205, 206 axial formschlüssig ineinandergreifen und durch axiale Schraubbolzen 207 zusammengespannt sind.

Der Mittenbereich der mittleren Scheibe 200 weist eine axial durchgehende Ausnehmung 208 auf, durch die mit Abstand von der radialen Begrenzungswand der Ausnehmung 208 ein axialer Bolzen 209 hindurchgreift, der mit einem axialen Ende in einer der als Seitenteil dienenden Scheiben 210 festgelegt und mit seinem dazu entgegengesetzten axialen Ende formschlüssig in eine axiale Bohrung 211 der anderen als Seitenteil dienenden Scheibe 212 aufgenommen ist.

Der Bolzen 209 ist diametral zu einer der Stellen angeordnet, an denen die beiden Teilscheiben 201, 202 mit ihren zueinander komplementären axialen Vorsprüngen 203, 204 aneinander anliegen. Diese Stelle ist als sich axial erstreckender Klemmspalt ausgebildet. Zu diesem Zweck ist in den beiden Teilscheiben 201, 202 ein Exzenter 213 mit einer in Richtung auf den Klemmspalt wirkenden Exzenterstange 214 gelagert.

Dieser Einsatz ist für band- oder faserförmige Proben bestimmt, die um den Bolzen 209 herumgeschlungen und mit ihren Enden mit Hilfe der Exzenterstange 214 in dem Klemmspalt festgeklemmt werden. Durch eine radiale Belastung der mittleren Scheibe 200 relativ zu den seitlichen Scheiben 210, 212 in der Richtung einer durch den Klemmspalt und den Bolzen 209 gelegten Geraden wird die beispielsweise bandförmige Probe auf Zug belastet.

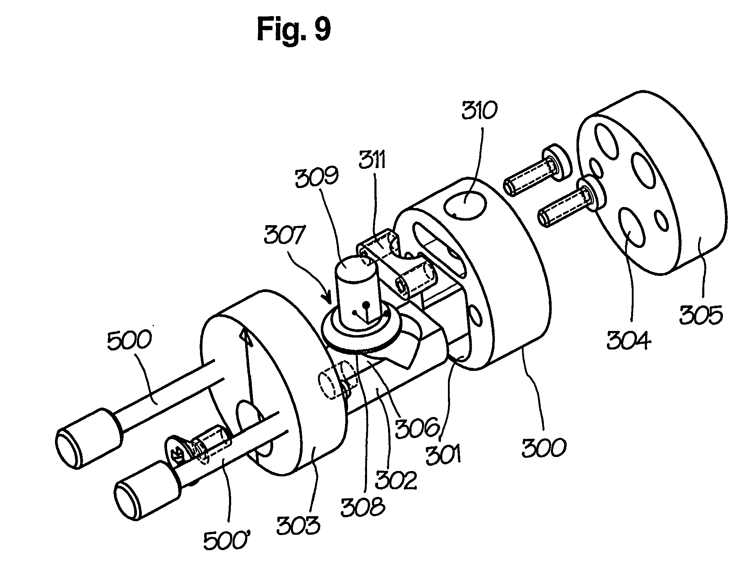

Bei der in Fig. 9 dargestellten Ausführungsform ist die mittlere Scheibe 300 einteilig und mit einer axialen Durchgangsöffnung 301 ausgebildet. Durch diese Durchgangsöffnung 301 greift mit Spiel ein axialer Tragbalken 302 hindurch, der mit einem axialen Ende in der seitlichen Scheibe 303 festgelegt und mit seinem anderen axialen Ende formschlüssig in einer Aufnahmebohrung 304 der anderen seitlichen Scheibe 305 abgestützt ist. An dem Tragbalken 302 ist eine in bezug auf die mittlere Scheibe 303 radial nach innen weisende Abstützfläche 306 für eine vorzugsweise zylinderförmige Probe ausgebildet. Dieser Abstützfläche 306 liegt in radialem Abstand eine von der Stirnseite eines radialen Stempels 307 gebildete Abstützfläche 308 gegenüber, wobei der Stempel 307 mit einem sich von der Abstützfläche 308 aus radial erstreckenden zylindrischen Schaft 309 in einer radialen Bohrung 310 der mittleren Scheibe 300 mittels eines axial eingesetzten Klemmstückes 311 festgehalten ist.

Bei diesem Einsatz wird die Probe zwischen den beiden Abstützflächen 306, 308 auf Druck belastet, wenn die mittlere Scheibe 300 gegenüber den seitlichen Scheiben 303, 305 in einer zu den Abstützflächen 306, 308 orthogonalen Richtung ausgelenkt wird.

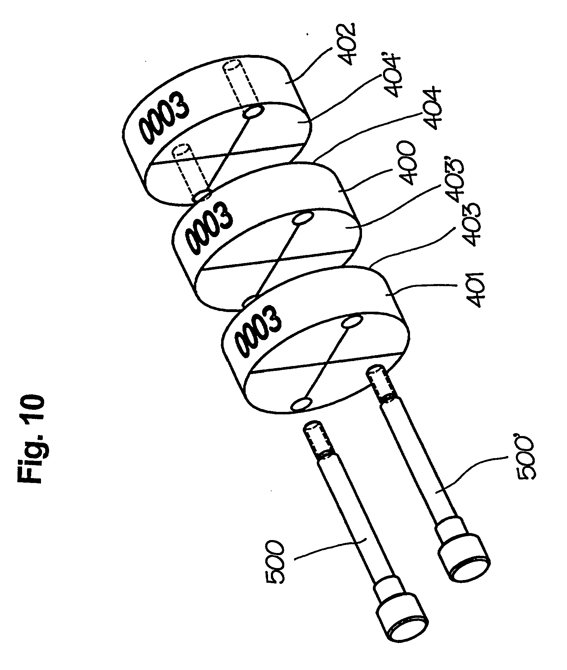

Bei der in Fig. 10 dargestellten Ausführungsform des Einsatzes sind die mittlere Scheibe 400 und die beiden seitlichen Scheiben 401, 402 im wesentlichen gleich ausgebildet. Zwei identische Proben werden zwischen den einander zugewandten radialen Stirnflächen 403, 403' und 404, 404' der seitlichen Scheibe 401 und mittleren Scheibe 400 bzw. mittleren Scheibe 400 und seitlichen Scheibe 402, beispielsweise durch Ankleben, festgelegt. Durch Auslenkung der mittleren Scheibe 400 relativ zu den beiden seitlichen Scheiben 401, 402 wird die Probe einer Scherbelastung unterzogen.

Wie aus der obigen Beschreibung an sich schon klar ist, werden die Einsätze mit den darin angeordneten Proben derart in den Probenhalter 11 eingesetzt, daß jeweils die mittlere Scheibe 200, 300 bzw. 400 formschlüssig in den Ring 101 aufgenommen ist, während die beiden seitlichen Scheiben 210, 212 bzw. 303, 305 bzw. 401, 402 jeweils in die zylindrischen Eintrittsbereiche 103, 103' des Gehäuses 100 formschlüssig aufgenommen sind. Auf diese Weise dient jeweils die mittlere Scheibe als Halteteil für einen ersten Bereich der Probe, mit dem die von dem Wandler 9 erzeugte Kraft eingeleitet wird, während die beiden seitlichen Scheiben jeweils als Halteteil für einen von dem ersten Bereich beabstandeten zweiten Bereich der Probe dienen, mit dem die Reaktionskraft abgestützt wird.

Bei jeder der in Fig. 8 bis 10 dargestellten Ausführungsformen des Einsatzes sind in jeder der Scheiben Paare axial miteinander fluchtender Bohrungen ausgebildet, durch die ein Paar axialer Zentrierstifte 500, 500' hindurchführbar ist. Zur Arbeitserleichterung bei der Vorbereitung des Einsatzes und beim Einführen in das Gehäuse 100 mit dem darin angeordneten Ring 101 können die Zentrierstifte 500, 500' durch die axial fluchtenden Bohrungen der Scheiben hindurchgeführt werden, wodurch eine stabile zylindrische Anordnung, die leicht handhabbar ist, erhalten wird. Natürlich müssen die Zentrierstifte 500, 500' bei der Messung entfernt werden.

### Verzeichnis der Bezugszeichen

- 1: Rohrkörper
- 2: rückwärtige Abdeckung
- 3: rückwärtiger Ansatz
- 4: Querwand
- 5: Betätigungsorgan
- 6: Hebetisch
- 7: Führungs- bzw. Schubglieder
- 8: Ausnehmungen
- 9: elektromechanischer Wandler
- 10: Koppelglied
- 11: Probenhalter
- 12: Kraftsensor
- 13: Justiervorrichtung
- 14: obere Stirnwand
- 15: Wegaufnehmer
- 16, 16': Öffnungen
- 17: Tragstange
- 18, 18': Seitenarme
- 19: Befestigungswand
- 20: Halterung
- 21, 21': Temperierkammerhälften
- 22: Zugangsöffnung
- 30: Gehäuseunterteil
- 31, 31': Gleitführungen
- 32: Gleitflächen
- 33: erster Schlitten
- 34: erste Gewindespindel
- 35: Schaftabschnitt
- 36: Kopf
- 37: Ringscheibe
- 38: Schaftabschnitt
- 39, 39': Kreisscheibensegmente
- 40, 40': Führungsflächen
- 41: Schwenkrahmen
- 42: Führungsflächen
- 43: Begrenzungsflächen
- 44, 44': Gleitführungen
- 45: zweiter Schlitten
- 46, 46': Gleitflächen
- 47: Rahmenschenkel
- 48: zweite Gewindespindel
- 49, 49': Führungsflächen
- 50: Anschlußteil
- 51: Gleitfläche
- 52: Ansatz
- 53: Stirnseite
- 54: Gehäuseoberteil
- 55: Schraubbolzen
- 56: Druckstück
- 57: Gewindebolzen
- 58: Gegenlager
- 59: Drehknopf
- 60: Öffnung
- 61: dritte Gewindespindel
- 62: Schaftabschnitt
- 63: Mitnehmer
- 64: sphärischer Endbereich
- 65: Bohrung
- 66: Bohrung
- 67: vierte Gewindespindel
- 68: Ausnehmung
- 69: erster Mitnehmer
- 70: radiale Scheibe
- 71: zweiter Mitnehmer
- 72: sphärischer Endbereich
- 73: Anzeigestift
- 74: Anzeigestift
- 75: Anzeigestift
- 76: Anzeigestift
- 100: Gehäuse
- 101: Ring
- 102: Anschlußflansch
- 103, 103': zylindrische Eintrittsbereiche

- 104: mittlerer Bereich
- 105: Innenmantel
- 106: schalenförmiger Teil
- 107: schalenförmiger Teil
- 108: Schraubbolzen
- 109: Überwurfmutter
- 110: Durchtrittsöffnung
- 111: Kern
- 200: mittlere Scheibe
- 201, 202: Teilscheiben
- 203, 204: axiale Vorsprünge
- 205, 206: Ausnehmungen
- 207: Schraubbolzen
- 208: Ausnehmung
- 209: Bolzen
- 210: seitliche Scheibe
- 211: Bohrung
- 212: seitliche Scheibe
- 213: Exzenter
- 214: Exzenterstange
- 300: mittlere Scheibe
- 301: Durchgangsöffnung
- 302: Tragbalken
- 303: seitliche Scheibe
- 304: Aufnahmebohrung
- 305: seitliche Scheibe
- 306: Abstützfläche
- 307: Stempel
- 308: Abstützfläche
- 309: Schaft
- 310: Bohrung
- 311: Klemmstück
- 400: mittlere Scheibe
- 401: seitliche Scheibe
- 402: seitliche Scheibe
- 403, 403': Stirnflächen
- 404, 404': Stirnflächen

## Patentansprüche

1. Vorrichtung zur dynamischen mechanischen Analyse von Proben, bei der an einem steifen Träger (1) mit aufrecht ausgerichteter Längsachse längs eines zu dieser parallelen linearen Kraftübertragungsweges angeordnet sind:
ein an den Kraftübertragungsweg angeschlossener elektromechanischer Wandler (9) zur Einleitung einer einem elektrischen Antriebssignal entsprechenden mechanischen Kraft,
ein Probenhalter (11) mit zwei längs des Kraftübertragungsweges relativ, zueinander auslenkbaren Halteteilen, an deren einem (200; 300; 400) die von dem Wandler (9) eingeleitete Kraft angekoppelt sowie ein erster Bereich der Probe befestigbar ist und an deren anderem (210, 212; 303, 305; 401, 402) die der eingeleiteten Kraft entgegengerichtete Reaktionskraft abgestützt sowie ein von dem ersten Bereich beabstandeter zweiter Bereich der Probe befestigbar ist,
eine Vorrichtung (15) zur Messung der durch die eingeleitete Kraft hervorgerufenen Auslenkung der beiden Halteteile (200, 210, 212; 300, 303, 305; 400, 401, 402) relativ zueinander, und
eine Justiervorrichtung (13) mit einem an ein Ende des Kraftübertragungsweges angeschlossenen Anschlußteil (50), das längs einer ersten Raumachse und längs einer dazu orthogonalen zweiten Raumachse quer zur Längsachse verstellbar ist,
**dadurch gekennzeichnet, daß** die Justiervorrichtung (13) einen längs der ersten Raumachse verschiebbar geführten ersten Schlitten (33) aufweist, sowie einen an dem ersten Schlitten (33) auf einem ersten zylindrischen Führungsflächensegment (40, 40') mit zur ersten Raumachse paralleler erster Zylinderachse verschiebbar geführten Schwenkrahmen (41) und einen an dem Schwenkrahmen (41) längs der zweiten Raumachse verschiebbar geführten zweiten Schlitten (45), an dem das Anschlußteil (50) auf einem zweiten zylindrischen Führungsflächensegment (49, 49') mit zur zweiten Raumachse paralleler zweiter Zylinderachse verschiebbar geführt ist.

2. Vorrichtung nach Anspruch 1, **dadurch gekennzeichnet, daß** die erste und die zweite Zylinderachse einander schneiden.

3. Vorrichtung nach Anspruch 1 oder 2, **dadurch gekennzeichnet, daß** die Krümmungsradien des ersten (40, 40') und des zweiten (49, 49') Führungsflächensegments gleich sind.

4. Vorrichtung nach einem der Ansprüche 1 bis 3, **dadurch gekennzeichnet, daß** der erste Schlitten (33) in einem feststehenden rahmenförmigen Gehäuseunterteil (30) geführt ist, in dem eine sich axial in der ersten Raumrichtung erstreckende und in ein Gewinde des ersten Schlittens (33) eingreifende erste Gewindespindel (34) drehbar gelagert ist.

5. Vorrichtung nach einem der Ansprüche 1 bis 4, **dadurch gekennzeichnet, daß** das erste zylindrische Führungsflächensegment (40, 40') durch zwei an zwei sich quer zur ersten Raumachse erstreckenden Stirnenden des ersten Schlittens (33) ausgebildete Kreisscheibensegmente (39, 39') gebildet ist, zwischen denen der Schwenkrahmen (41) angeordnet und auf dazu komplementär ausgebildeten Ausnehmungen (42) seiner entsprechenden Stirnenden abgestützt ist.

6. Vorrichtung nach einem der Ansprüche 1 bis 5, **dadurch gekennzeichnet, daß** der zweite Schlitten (45) in dem Schwenkrahmen (41) geführt ist, in dem eine sich axial in der zweiten Raumrichtung erstreckende und in ein Gewinde des zweiten Schlittens (45) eingreifende zweite Gewindespindel (48) drehbar gelagert ist.

7. Vorrichtung nach einem der Ansprüche 1 bis 6, **dadurch gekennzeichnet, daß** das zweite zylindrische Führungsflächensegment durch zwei an zwei sich quer zur zweiten Raumachse erstreckenden Stirnenden des zweiten Schlittens (45) ausgebildete Zylindermantelsegmente (49, 49') gebildet ist, auf denen das Anschlußteil (50) mit dazu komplementär ausgebildeten Gleitflächen (51) abgestützt ist.

8. Vorrichtung nach einem der Ansprüche 1 bis 7, **dadurch gekennzeichnet, daß** das Anschlußteil (50) einen sich in der Längsachse erstreckenden, durch Ausnehmungen der Schlitten (33, 45) und des Schwenkrahmens (41) hindurchgreifenden Ansatz (52) aufweist.

9. Vorrichtung nach einem der Ansprüche 1 bis 8, **dadurch gekennzeichnet, daß** in einem feststehenden Gehäuseoberteil (54) eine sich axial in der zweiten Raumrichtung erstreckende dritte Gewindespindel (61) drehbar gelagert ist, auf deren Gewinde (62) ein an dem Schwenkrahmen (41) angreifender Mitnehmer (63) geführt ist.

10. Vorrichtung nach einem der Ansprüche 1 bis 9, **dadurch gekennzeichnet, daß** in einem feststehenden Gehäuseoberteil (54) eine sich axial in der ersten Raumrichtung erstrekkende vierte Gewindespindel (67) drehbar und axialverschieblich gelagert ist, die durch einen ersten Mitnehmer (69) mit dem zweiten Schlitten (45) gekoppelt und auf deren Gewinde ein an dem Anschlußteil (50) angreifender zweiter Mitnehmer (71) geführt ist.

11. Vorrichtung nach einem der Ansprüche 4 bis 10, **dadurch gekennzeichnet, daß** an den auf den Gewinden der Gewindespindeln (34, 48, 61, 67) geführten Teilen sich parallel zu den Gewindespindeln erstreckende Anzeigestifte (73, 74, 75, 76) festgelegt sind.

12. Vorrichtung zur dynamischen mechanischen Analyse von Proben, bei der an einem steifen Träger (1) mit aufrecht ausgerichteter Längsachse längs eines zu dieser parallelen linearen Kraftübertragungsweges angeordnet sind:
ein an den Kraftübertragungsweg angeschlossener elektromechanischer Wandler (9) zur Einleitung einer einem elektrischen Antriebssignal entsprechenden mechanischen Kraft,
ein Probenhalter (11) mit zwei längs des Kraftübertragungsweges relativ zueinander auslenkbaren Halteteilen, an deren einem (200;300;400) die von dem Wandler (9) eingeleitete Kraft angekoppelt sowie ein erster Bereich der Probe befestigbar ist und an deren anderem (210, 212; 303, 305; 401, 402) die der eingeleiteten Kraft entgegengerichtete Reaktionskraft abgestützt sowie ein von dem ersten Bereich beabstandeter zweiter Bereich der Probe befestigbar ist, '
eine Vorrichtung (15) zur Messung der durch die eingeleitete Kraft hervorgerufenen Auslenkung der beiden Halteteile (200, 210, 212; 300, 303, 305; 400, 401, 402) relativ zueinander, und
eine Justiervorrichtung (13) mit einem an ein Ende des Kraftübertragungsweges angeschlossenen Anschlußteil (50), das längs einer ersten Raumachse und längs einer dazu orthogonalen zweiten Raumachse quer zur Längsachse verstellbar ist,
insbesondere nach einem der Ansprüche 1 bis 10, **dadurch gekennzeichnet, daß** der Probenhalter (11) ein Gehäuse (100) mit einem sich längs einer quer zur Längsachse gerichteten Querachse durch das Gehäuse (100) hindurch erstreckenden Aufnahmeraum (103, 103', 104) für einen dreiteiligen Einsatz, dessen in der Richtung der Querachse gesehen mittlerer Teil (200; 300; 400) den ersten Halteteil bildet und formschlüssig in einem in dem Aufnahmeraum (103, 103', 104) mit Bewegungsspielraum angeordneten Ring (101) gelagert und dessen beidseits des mittleren Teils (200,300,400) angeordnete Seitenteile (210;212;303;305;401;402;) den zweiten Halteteil bilden und formschlüssig in dem Aufnahmeraum (103;103';104) gelagert sind, aufweist, sowie mit einer Öffnung (110) zur Durchführung eines sich in der Längsachse erstreckenden und an den Ring (101) angeschlossenen Kraftübertragungsgliedes (10) und mit einem der Öffnung (110) in der Längsachse gesehen gegenüberliegenden Anschlußbereich (102) für ein der Aufnahme der Reaktionskraft dienendes Glied (12, 15)

13. Vorrichtung nach Anspruch 12, **dadurch gekennzeichnet, daß** der mittlere Teil (200, 300, 400) und die beiden Seitenteile (210, 212; 303, 305; 401, 402) als zylindrische Scheiben mit sich in bezug auf die Querachse radial erstrekkenden kreisförmigen Stirnflächen ausgebildet sind.

14. Vorrichtung nach Anspruch 12 oder 13, **dadurch gekennzeichnet, daß** der Einsatz einen in seinem mittleren Teil (200) ausgebildeten Probenaufnahmeraum (208), einen sich von dem Probenaufnahmeraum (208) aus in bezug auf die Querachse radial nach außen erstreckenden Klemmspalt (213, 214) und einen den Probenaufnahmeraum an einer von dem Klemmspalt radial beabstandeten Stelle in der Richtung der Querachse durchsetzenden starren Stab (209), der mit seinen Enden in Ausnehmungen der beiden Seitenteile (210, 212) abgestützt ist, aufweist.

15. Vorrichtung nach Anspruch 12 oder 13, **dadurch gekennzeichnet, daß** der Einsatz einen in seinem mittleren Teil (300) ausgebildeten Probenaufnahmeraum (301), eine in dem Probenaufnahmeraum (301) ausgebildete Abstützfläche (308) zur in bezug auf die Querachse radialen Abstützung einer Probe und eine den Probenaufnahmeraum (301) an einer von der Abstützfläche (308) radial beabstandeten Stelle in der Richtung der Querachse durchsetzende Gegenabstützung (302, 306), die mit ihren Enden in Ausnehmungen der beiden Seitenteile (303, 305) abgestützt ist, aufweist.

16. Vorrichtung nach einem der Ansprüche 12 bis 15, **dadurch gekennzeichnet, daß** dem mittleren Teil (200;300;400) und den beiden Seitenteilen (201, 212; 303, 305; 401, 402) in der Richtung der Querachse miteinander fluchtende Zentrierbohrungen zur Aufnahme von Zentrierstiften (500, 500') ausgebildet sind.

17. Vorrichtung zur dynamischen mechanischen Analyse von Proben, bei der an einem steifen Träger (1) mit aufrecht ausgerichteter Längsachse längs eines zu dieser parallelen linearen Kraftübertragungsweges angeordnet sind:
ein an den Kraftübertragungsweg angeschlossener elektromechanischer Wandler (9) zur Einleitung einer einem elektrischen Antriebssignal entsprechenden mechanischen Kraft,
ein Probenhalter (11) mit zwei längs des Kraftübertragungsweges relativ zueinander auslenkbaren Halteteilen, an deren einem (200; 300; 400) die von dem Wandler (9) eingeleitete Kraft angekoppelt sowie ein erster Bereich der Probe befestigbar ist und an deren anderem (210, 212; 303, 305; 401, 402) die der eingeleiteten Kraft entgegengerichtete Reaktionskraft abgestützt sowie ein von dem ersten Bereich beabstandeter zweiter Bereich der Probe befestigbar ist,
eine Vorrichtung (15) zur Messung der durch die eingeleitete Kraft hervorgerufenen Auslenkung der beiden Halteteile (200, 210, 212 ; 300, 303, 305; 400, 401, 402) relativ zueinander, und
eine Justiervorrichtung (13) mit einem an ein Ende des Kraftübertragungsweges angeschlossenen Anschlußteil (50), das längs einer ersten Raumachse und längs einer dazu orthogonalen zweiten Raumachse quer zur Längsachse verstellbar ist,
insbesondere nach einem der Ansprüche 1 bis 15, **dadurch gekennzeichnet, daß** der Träger in der Form eines den Kraftübertragungsweg mit dem Wandler (9), dem Probenhalter (11), der Meßvorrichtung und der Justiervorrichtung (13) umschließenden Rohrkörpers (1) mit einer im Bereich des Probenhalters (11) vorgesehenen Zugangsöffnung (22) ausgebildet ist.

18. Vorrichtung nach Anspruch 17, **dadurch gekennzeichnet, daß** im Bereich des Probenhalters (11) zwei Temperierkammerhälften (21, 21') vorgesehen sind, die längs einer sich quer zur Längsachse erstreckenden Querachse zwischen einer geschlossenen Stellung, in der sie den Probenhalter (11) umschließen, und einer geöffneten Stellung, in der der Probenhalter (11) freiliegt, verschiebbar sind

19. Vorrichtung nach Anspruch 18, **dadurch gekennzeichnet, daß** die Temperierkammerhälften (21, 21') an zwei an dem Rohrkörper (1) abgestützten Seitenarmen (18, 18') angeordnet sind.

## Claims

1. Device for dynamic, mechanical analysis of samples, in which the following are disposed along a power transmission line that runs parallel to a rigid support member (1) with a vertical lengthwise axis:
an electro-mechanical transformer (9) connected to the power transmission line for introducing a mechanical force corresponding to the electrical drive signal,
a sample holder (11) with two holding sections, which can move out in relation to each other along the power transmission path, to one holding section (200; 300; 400) of which the force induced by the transformer (9) is coupled and a first area of the sample can be attached, and on the other holding section (210; 212; 303, 305; 401, 402) of which rests the reaction force, opposing the induced force and a second area of the sample, separated from the first, can be attached,
a device (15) for measuring the moving out of the two holding sections (200, 210, 212; 300, 303, 305; 400, 401, 402) in relation to each other as a result of the induced force, and
an adjustment device (13) with a connection piece (50) connected to an end of the power transmission line, it being possible for the said connection piece (50) to be shifted along a first spatial axis and along a second spatial axis that is orthogonally aligned in relation to the first and that can be shifted transversely in relation to the longitudinal axis,
**characterized in that** the adjustment device (13) has a first carrier (33) that is guided such that it can be displaced along the first spatial axis, and **in that** a swivel frame (41) that is displaceably guided on the first carrier (33) on a first cylindrical guide face segment (40, 40') with a first cylinder axis that runs parallel to the first spatial axis and a second carrier (45) is displaceably guided on the swivel frame (41) along the second spatial axis and, on the said second carrier (45), the connection piece (50) is guided on a second cylindrical guide surface segment (49, 49') with a second cylinder axis that runs parallel to the second spatial axis.

2. Device in accordance with claim 1, **characterized in that** the first and the second cylinder axis intersect each other.

3. Device in accordance with claim 1 or 2, **characterized in that** the radius of curvature of the first (40, 40') guide surface segment is the same as that of the second guide surface segment (49, 49').

4. Device in accordance with one of claims 1 to 3, **characterized in that** the first carrier (33) is guided in a fixed frame-type lower housing section (30) in which a first threaded spindle (34), which extends axially in the first spatial direction and engages in a thread of the first carrier (33), is supported.

5. Device in accordance with one of claims 1 to 4, **characterized in that** the first cylindrical guide surface segment (40, 40') is formed by two circular disk segments (39, 39') formed on two end faces of the first carrier (33) extending transversely in relation to the first spatial axis, the swivel frame (41) being disposed between the said circular disk segments (39, 39') with the relevant end faces of the swivel frame (41) being supported on complementary clearances (42).

6. Device in accordance with one of claims 1 to 5, **characterized in that** the second carrier (45) is guided in the swivel frame (41) in which a second threaded spindle (48) extends axially in the second spatial direction and, engaging in a thread of the second carrier (45), is supported such that it can rotate.

7. Device in accordance with one of claims 1 to 6, **characterized in that** the second cylindrical guide face segment is formed of two cylinder barrel segments (49, 49') formed on two end faces, of the second carrier (45) extending transversely in relation to the second spatial axis, whereby the connection piece (50), with complementary gliding faces (51), is supported on the said cylinder barrel segments (49, 49').

8. Device in accordance with one of claims 1 to 7, **characterized in that** the connection piece (50) has an abutment means (52) extending, in the longitudinal axis, through clearances in the carrier (33, 45).

9. Device in accordance with one of claims 1 to 8, **characterized in that** a third threaded spindle (61) is supported such that it can rotate in a fixed upper housing section (54), and extends axially in the second spatial direction, whereby an entrainment means, which engages on the swivel frame (41), is guided on the thread of the third threaded spindle (61).

10. Device in accordance with one of claims 1 to 9, **characterized in that** a fourth threaded spindle (67), which extends axially in the first spatial direction, is supported, in a fixed upper housing section (54), such that it can rotate and be displaced in an axial direction, whereby the said fourth threaded spindle (67) is coupled, by means of a first entrainment means (69), with the second carrier (45) and a second entrainment means (71) engaging on the connection piece (50) is guided on the thread of the said fourth threaded spindle(67).

11. Device in accordance with one of claims 4 to 10, **characterized in that** indicator pins (73, 74, 75, 76) extending parallel to the threaded spindles (34, 48, 61, 67) are secured on the parts guided on the threads of the threaded spindles (34, 48, 61, 67).

12. Device for dynamic, mechanical analysis of samples, in which the following are disposed along a power transmission line that runs parallel to a rigid support member (1) with a vertical lengthwise axis:
an electro-mechanical transformer (9) connected to the power transmission line for introducing a mechanical force corresponding to the electrical drive signal,
a sample holder (11) with two holding sections, which can move out in relation to each other along the power transmission path, to one holding section (200; 300; 400) of which the force induced by the transformer (9) is coupled and a first area of the sample can be attached, and on the other holding section (210; 212; 303, 305; 401, 402) of which rests the reaction force, opposing the induced force and a second area of the sample, separated from the first, can be attached,
a device (15) for measuring the moving out of the two holding sections (200, 210, 212; 300, 303, 305; 400, 401, 402) in relation to each other as a result of the induced force, and
an adjustment device (13) with a connection piece (50) connected to an end of the power transmission line, it being possible for the said connection piece (50) to be shifted along a first spatial axis and along a second spatial axis that is orthogonally aligned in relation to the first and that can be shifted transversely in relation to the longitudinal axis,
particularly in accordance with one of claims 1 to 10, **characterized in that** the sample holder (11) has a housing (100) with an uptake space (103, 103', 104), extending through the housing (100) along a transverse axis aligned transversely in relation to the longitudinal axis, the said uptake space (103, 103', 104) being for a three-part insert, the central section (200; 300; 400) of which, as seen in the direction of the transverse axis, forms the first holding section and is form-locking in a ring (101) disposed in the uptake space (103, 103', 104) with play for movement, and whereby the lateral sections (210, 212; 303, 305; 401, 402) of the three-part insert, disposed on either side of its central section (200; 300; 400), form the second holding section and are supported, in a form-locking mode, in the uptake space (103, 103', 104), and whereby the housing (100) further has an opening (110) for a power transmission member (10), which extends in the longitudinal axis and is connected to the ring (101), to pass through, and further has a connection area (102), lying opposite the opening (110) as seen in the direction of the longitudinal axis, for a member (12, 15) that takes up the force of reaction.

13. Device in accordance with claim 12, **characterized in that** the central section (200, 300, 400) and the two side sections (210, 212; 303, 305; 401, 402) are formed as cylindrical disks with circular end faces that extend radially in relation to the transverse axis.

14. Device in accordance with claim 12 or 13, **characterized in that** the insert has a sample uptake space (208) formed in its central section (200), a clamping gap (213, 214) extending radially outwards from the sample uptake space (208) and a fixed rod (209) that passes, in the direction of the transverse axis, through the sample uptake space to a point separated radially from the clamping gap, the said fixed rod (209) being supported, with its ends, in recesses in the two side sections (210, 212).

15. Device in accordance with claim 12 or 13, **characterized in that** the insert has a sample uptake space (301) in its central section (300), a support surface (308) formed in the sample uptake space (301) for radial support, for a sample, in relation to the transverse axis, and a counter support means (302, 306) that passes, in the direction of the transverse axis, through the sample uptake space (301) to a point separated radially from the support surface (308), the said counter support being supported, with its ends, in recesses in the two side sections (303, 305)

16. Device in accordance with one of claims 12 to 15, **characterized in that** centring holes, to take up centring pins (500, 500'), are formed, in the direction of the transverse axis, in the central section (200; 300; 400) and in the two side sections (210, 212; 303, 305; 401,402), the said centring holes being aligned with each other.

17. Device for dynamic, mechanical analysis of samples, in which the following are disposed along a power transmission line that runs parallel to a rigid support member (1) with a vertical lengthwise axis:
an electro-mechanical transformer (9) connected to the power transmission line for introducing a mechanical force corresponding to the electrical drive signal,
a sample holder (11) with two holding sections, which can move out in relation to each other along the power transmission path, to one holding section (200; 300; 400) of which the force induced by the transformer (9) is coupled and a first area of the sample can be attached, and on the other holding section (210; 212; 303, 305; 401, 402) of which rests the reaction force, opposing the induced force and a second area of the sample, separated from the first, can be attached,
a device (15) for measuring the moving out of the two holding sections (200, 210, 212; 300, 303, 305; 400, 401, 402) in relation to each other as a result of the induced force, and
an adjustment device (13) with a connection piece (50) connected to an end of the power transmission line, it being possible for the said connection piece (50) to be shifted along a first spatial axis and along a second spatial axis that is orthogonally aligned in relation to the first and that can be shifted transversely in relation to the longitudinal axis,
particularly in accordance with one of claims 1 to 15, **characterized in that** the support member is in the form of a tubular body (1), with an access aperture (22) in the area of the sample holder (11), surrounding the power transmission line with the transformer (9), the sample holder (11), the measuring device and the adjustment device (13).

18. Device in accordance with claim 17, **characterized in that** there are two tempering chamber halves (21, 21'), in the area of the sample holder (11), that can shift, along a transverse axis extending transversely in relation to the longitudinal axis, between a closed setting in which they enclose the sample holder (11) and an open setting in which the sample holder (11) is free.

19. Device in accordance with claim 18, **characterized in that** the tempering chamber halves (21, 21') are disposed on two side arms (18, 18') resting on the tubular body (1).

## Revendications

1. Dispositif pour l'analyse mécanique dynamique d'échantillons, dans lequel sur un support rigide (1) à axe longitudinal disposé verticalement, sont montés le long d'une ligne de transmission de force, parallèle à cet axe :
- un convertisseur (9) électromécanique raccordé à la ligne de transmission de force et dont le rôle est d'introduire une force mécanique correspondant à un signal électrique d'entraînement,
- un porte-échantillon (11) avec deux parties porteuses pouvant basculer l'une par rapport à l'autre le long de la ligne de transmission de force, la force introduite par le convertisseur (9) étant accouplée à une (200 ; 300 ; 400) de ces parties à laquelle peut être également fixée une première zone de l'échantillon tandis que la force de réaction qui s'oppose à la force introduite s'appuie sur l'autre partie (210, 212 ; 303, 305 ; 401, 402) à laquelle peut être fixée une deuxième zone de l'échantillon, éloignée de la première,
- un dispositif (15) pour mesurer la déviation, provoquée par la force introduite, de deux parties de maintien (200, 210, 212 ; 300, 303, 305 ; 400, 401, 402) l'une par rapport à l'autre,
- un dispositif d'ajustage (13) présentant, raccordée à une extrémité de la ligne de transmission de force, une partie de raccordement (50) qui peut se déplacer le long d'un premier axe spatial et le long d'un second axe spatial perpendiculaire au premier,
**caractérisé en ce que** le dispositif d'ajustage (13) présente un premier coulisseau (33) mobile le long du premier axe spatial, un cadre basculant pouvant coulisser sur ce premier coulisseau le long d'une première portée de guidage (40, 40') cylindrique avec un premier axe de cylindre parallèle au premier axe spatial, ainsi que sur le cadre basculant (41) peut coulisser le long du second axe spatial un second coulisseau (45) sur lequel la partie de raccordement (50) peut coulisser le long d'une seconde portée de guidage (49, 49') cylindrique avec un second axe de cylindre parallèle au second axe spatial.

2. Dispositif selon la revendication 1, **caractérisé en ce que** le premier et le second axe de cylindre se coupent.

3. Dispositif selon la revendication 1 ou 2, **caractérisé en ce que** les rayons de courbure de la première (40, 40') et de la seconde (49, 49') portée de guidage sont égaux.

4. Dispositif selon une des revendications 1 à 3, **caractérisé en ce que** le premier coulisseau (33) est guidé dans une partie inférieure de boîtier (30) fixée en forme de cadre, et dans laquelle est montée en rotation une première broche filetée (34) dont l'axe est parallèle à la première direction spatiale et qui est engagée dans un filetage du premier coulisseau (33).

5. Dispositif selon une des revendications 1 à 4, **caractérisé en ce que** la première portée cylindrique de guidage (40, 40') est constituée par deux segments de cercle (39, 39') formés sur deux extrémités frontales du premier coulisseau (33) qui sont perpendiculaires au premier axe spatial, et entre lesquelles est monté le cadre basculant (41) en appui sur des évidements (42) dont les formes sont complémentaires à celles de ses extrémités frontales correspondantes.

6. Dispositif selon une des revendications 1 à 5, **caractérisé en ce que** le second coulisseau (45) est guidé dans le cadre basculant (41) dans lequel est montée en rotation une seconde broche filetée (48) dont l'axe est parallèle à la seconde direction spatiale et qui est engagée dans un filetage du second coulisseau (45)..

7. Dispositif selon une des revendications 1 à 6, **caractérisé en ce que** la seconde portée cylindrique est constituée par deux segments de surface cylindriques (49, 49') formés sur les deux extrémités frontales au second coulisseau (45) qui sont perpendiculaires au second axe spatial, et sur ces segments la partie de raccordement (50) s'appuie par des portées de glissement (51) ayant des formes complémentaires.

8. Dispositif selon une des revendications 1 à 7, **caractérisé en ce que** la partie de raccordement (50) présente un appendice (52) s'étendant selon l'axe longitudinal et passant à travers d'évidements du coulisseau (33, 45) et du cadre basculant (41).

9. Dispositif selon une des revendications 1 à 8, **caractérisé en ce que** dans une partie supérieure de boîtier (54) fixe est montée en rotation une troisième broche filetée (61) dont l'axe est parallèle à la seconde direction spatiale et qui est engagée dans un entraîneur (63) en prise avec le cadre basculant (41).

10. Dispositif selon une des revendications 1 à 9, **caractérisé en ce que** dans une partie supérieure de boîtier (54) peut tourner et coulisser axialement une quatrième broche filetée (67) dont l'axe est parallèle à la première direction spatiale, qui est accouplée par un premier entraîneur (69) au second coulisseau (45) et qui guide par son filetage un second entraîneur (71) en prise avec la partie de raccordement (50).

11. Dispositif selon une des revendications 4 à 10, **caractérisé en ce que** sur les parties que guident les filetages des boches filetées (34, 48, 61, 67), sont fixées parallèlement à ces broches des tiges indicatrices (73, 74, 75, 76).

12. Dispositif pour l'analyse mécanique dynamique d'échantillons, dans lequel sur un support rigide (1) à axe longitudinal disposé verticalement, sont montés le long d'une ligne de transmission de force, parallèle à cet axe :
- un convertisseur (9) électromécanique raccordé à la ligne de transmission de force et dont le rôle est d'introduire une force mécanique correspondant à un signal électrique d'entraînement,
- un porte-échantillon (11) avec deux parties porteuses pouvant basculer l'une par rapport à l'autre le long de la ligne de transmission de force, la force introduite par le convertisseur (9) étant accouplée à une (200 ; 300 ; 400) de ces parties à laquelle peut être également fixée une première zone de l'échantillon tandis que la force de réaction qui s'oppose à la force introduite s'appuie sur l'autre partie (210, 212 ; 303, 305 ; 401, 402) à laquelle peut être fixée une deuxième zone de l'échantillon, éloignée de la première,
- un dispositif (15) pour mesurer la déviation, provoquée par la force introduite, de deux parties de maintien (200, 210, 212 ; 300, 303, 305 ; 400, 401, 402) l'une par rapport à l'autre,
- un dispositif d'ajustage (13) présentant, raccordée à une extrémité de la ligne de transmission de force, une partie de raccordement (50) qui peut se déplacer le long d'un premier axe spatial et le long d'un second axe spatial perpendiculaire au premier,
notamment selon une des revendications 1 à 10, **caractérisé en ce que** le porte-échantillon (11) présente un boîtier (100) avec un espace d'accueil (103, 103', 104) s'étendant à travers ce boîtier selon un axe transversal perpendiculaire à l'axe longitudinal pour recevoir une pièce rapportée en trois parties avec, observée selon la direction de l'axe transversal, sa partie médiane qui constitue la première partie porteuse montée avec verrouillage par combinaison de formes dans une bague (101) logée avec du jeu dans l'espace d'accueil (103, 103', 104), tandis que les parties latérales (210, 212 ; 303, 305 ; 401, 402) situées de part et d'autre de la partie médiane (200 ; 300, 400) forment la seconde partie porteuse en étant montées avec verrouillage par combinaison de formes dans l'espace d'accueil (103, 103', 104), ainsi qu'une ouverture (110) pour le passage d'un organe de transmission de force s'étendant selon l'axe longitudinal en étant raccordé à la bague (101) et une zone de raccordement (102) qui, observée selon l'axe longitudinal, est à l'opposé de l'ouverture (110) et sert à accueillir un organe (12, 15) destiné à prendre en charge la force de réaction.

13. Dispositif selon la revendication 12, **caractérisé en ce que** la partie médiane (200, 300, 400) et les deux parties latérales (210, 212 ; 303, 305 ; 401, 402) sont constituées par des disques cylindriques dont les faces frontales circulaires sont radiales par rapport à l'axe transversal.

14. Dispositif selon la revendication 12 ou 13, **caractérisé en ce que** la pièce rapportée présente vers son centre (200) un espace d'accueil d'échantillon (208) d'où part radialement par rapport à l'axe transversal une fente de serrage (213, 214) s'étendant vers l'extérieur et une barre traversant, selon la direction de l'axe transversal, cet espace d'accueil en un point éloigné radialement de la fente de serrage, cette barre (209) rigide étant en appui par ses extrémités dans des évidements des deux parties latérales (210, 212).

15. Dispositif selon la revendication 12 ou 13, **caractérisé en ce que** la pièce rapportée présente vers son centre (300) un espace d'accueil (301) dans lequel est réalisée une portée d'appui (301) pour soutenir un échantillon radialement par rapport à l'axe transversal et un appui d'opposition traversant selon la direction de l'axe transversal l'espace d'accueil (301) en un point éloigné radialement de la portée d'appui (308), cet appui d'opposition (302, 306) reposant par ses extrémités dans des évidements des deux parties latérales (303, 305).

16. Dispositif selon une des revendications 12 à 15, **caractérisé en ce que** dans la partie médiane (200 ; 300 ; 400) et dans les deux parties latérales (210, 212 ; 303, 305 ; 401, 402) sont réalisés, pour accueillir des broches de centrage (500, 500'), des alésage de centrage alignés entre eux.

17. Dispositif pour l'analyse mécanique dynamique d'échantillons, dans lequel sur un support rigide (1) à axe longitudinal disposé verticalement, sont montés le long d'une ligne de transmission de force, parallèle à cet axe :
- un convertisseur (9) électromécanique raccordé à la ligne de transmission de force et dont le rôle est d'introduire une force mécanique correspondant à un signal électrique d'entraînement,
- un porte-échantillon (11) avec deux parties porteuses pouvant basculer l'une par rapport à l'autre le long de la ligne de transmission de force, la force introduite par le convertisseur (9) étant accouplée à une (200 ; 300 ; 400) de ces parties à laquelle peut être également fixée une première zone de l'échantillon tandis que la force de réaction qui s'oppose à la force introduite s'appuie sur l'autre partie (210, 212 ; 303, 305 ; 401, 402) à laquelle peut être fixée une deuxième zone de l'échantillon, éloignée de la première,
- un dispositif (15) pour mesurer la déviation, provoquée par la force introduite, de deux parties de maintien (200, 210, 212 ; 300, 303, 305 ; 400, 401, 402) l'une par rapport à l'autre,
- un dispositif d'ajustage (13) présentant, raccordée à une extrémité de la ligne de transmission de force, une partie de raccordement (50) qui peut se déplacer le long d'un premier axe spatial et le long d'un second axe spatial perpendiculaire au premier,
notamment selon une des revendications 1 à 15, **caractérisé en ce que** le support a la forme d'un corps tubulaire (1) entourant la ligne de transmission de force avec le convertisseur (9), le porte-échantillon (11), le dispositif de mesure et le dispositif d'ajustage (13) et présente dans la zone de porte-échantillon (11) une ouverture d'accès (22).

18. Dispositif selon la revendication 17, **caractérisé en ce qu'**il est prévu dans la zone du porte-échantillon (11) deux demi-chambres d'équilibrage de température (21, 21') qui peuvent coulisser le long d'un axe transversal perpendiculaire à l'axe longitudinal, entre une position de fermeture dans laquelle elles entourent le porte-échantillon (11), et une position d'ouverture dans laquelle celui-ci est libéré.

19. Dispositif selon la revendication 18, **caractérisé en ce que** les deux demi-chambres (21, 21') sont disposées sur deux bras qui s'appuient sur le corps tubulaire (1).
